(19) 

**Europäisches Patentamt**
**European Patent Office**
**Office européen des brevets**

(11) **EP 4 663 801 A1**

(12) **EUROPEAN PATENT APPLICATION**
published in accordance with Art. 153(4) EPC

(43) Date of publication:
**17.12.2025 Bulletin 2025/51**

(21) Application number: **24778946.4**

(22) Date of filing: **27.02.2024**

(51) International Patent Classification (IPC):
*C22C 38/00* $^{(2006.01)}$  *C21D 9/46* $^{(2006.01)}$
*C21D 9/56* $^{(2006.01)}$  *C22C 38/06* $^{(2006.01)}$
*C22C 38/60* $^{(2006.01)}$

(52) Cooperative Patent Classification (CPC):
**C21D 9/46; C21D 9/56; C22C 38/00; C22C 38/06;
C22C 38/60**

(86) International application number:
**PCT/JP2024/006907**

(87) International publication number:
**WO 2024/202804 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058452**

(71) Applicant: JFE Steel Corporation
**Tokyo 100-0011 (JP)**

(72) Inventors:
• **YAMAGISHI, Daiki**
  **Tokyo 100-0011 (JP)**
• **WANG, Fangyi**
  **Tokyo 100-0011 (JP)**
• **KAWASAKI, Yoshiyasu**
  **Tokyo 100-0011 (JP)**
• **NAKAGAITO, Tatsuya**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **STEEL SHEET, MEMBER, AND PRODUCTION METHODS FOR THESE**

(57)     To provide a steel sheet and a member with a tensile strength TS of 780 MPa or more and less than 1180 MPa, a high yield stress YS, a high total elongation, a high local elongation, a high bendability, and good energy absorption characteristics, and methods for producing them.

A base steel sheet has a predetermined chemical composition, a surface soft layer of 20 μm or more is provided on a surface layer of the base steel sheet, ferrite, bainitic ferrite, tempered martensite, retained austenite, and fresh martensite are set to predetermined ranges in a steel microstructure at a quarter thickness position of the base steel sheet, and a hard second phase present in the bainitic ferrite and containing the retained austenite and the fresh martensite has an average grain size of 3.0 μm or less.

EP 4 663 801 A1

**Description**

Technical Field

The present invention relates to a steel sheet with high-strength and good collision characteristics, a member, and methods for producing them. A steel sheet according to the present invention can be suitably used mainly for an automotive steel sheet.

Background Art

To reduce $CO_2$ emissions from the perspective of global environmental conservation, it is always important in the automobile industry to reduce the weights of automobile bodies while maintaining their strength and improve mileage. To reduce the weight of an automobile body while maintaining its strength, it is effective to reinforce a steel sheet used as a material for an automotive part and thereby reduce the thickness of the steel sheet. On the other hand, an automotive part made of a steel sheet is required to ensure the safety of occupants in the automobile in case of a collision. Thus, a high-strength steel sheet used as a material for an automotive part is required to have good collision characteristics as well as desired strength.

In recent years, high-strength steel sheets with a tensile strength TS of 780 MPa or more have been increasingly applied to automobile bodies. From the perspective of collision characteristics, automotive parts are broadly divided into non-deformable members, such as pillars and bumpers, and energy-absorbing members, such as side members, and these members should have collision characteristics necessary to ensure the safety of occupants in a moving automobile in case of a collision. The strength of a non-deformable member has been increased, and a high-strength steel sheet with a tensile strength (hereinafter also referred to simply as TS) of 780 MPa or more has already been put into practical use. In the application to an energy-absorbing member, however, a high-strength steel sheet with a strength of 780 MPa or more is likely to cause member fracture starting from a portion subjected to primary processing by forming in case of a collision, and there is a problem that an impact energy absorption ability cannot be stably exhibited, and a material with a strength of 590 MPa or less is mainly applied. Thus, there is room for contribution to environmental conservation by weight reduction while ensuring safety in case of a collision by suppressing member fracture in case of a collision and stably exhibiting high absorbed energy. Thus, there is a need for a high-strength steel sheet with good collision characteristics and with a TS of 780 MPa or more to be applied to an energy-absorbing member.

As a steel sheet serving as a material for such an automotive part, for example, Patent Literature 1 discloses a high-strength hot-dip galvanized steel sheet with a high TS-El balance, high stretch flangeability, a low YR, and high workability, which has a chemical composition containing, on a mass percent basis, C: 0.05% to 0.3%, Si: 0.01% to 2.5%, Mn: 0.5% to 3.5%, P: 0.003% to 0.100%, S: 0.02% or less, Al: 0.010% to 1.5%, and N: 0.007% or less, with the remainder being Fe and incidental impurities, and has a microstructure containing, in terms of area fraction, 20% to 87% ferrite, a total of 3% to 10% martensite and retained austenite, and 10% to 60% tempered martensite.

Patent Literature 2 discloses a high-strength hot-dip galvanized steel sheet with a coated layer on a surface of the steel sheet and with a thickness in the range of 0.6 to 5.0 mm, characterized in that the microstructure of the steel sheet includes 40% to 90% of a ferrite phase and 3% to 25% of a retained austenite phase in terms of volume fraction, the retained austenite phase has a solid-solution carbon content in the range of 0.70% to 1.00%, an average grain size of 2.0 $\mu$m or less, and an average distance between grains in the range of 0.1 to 5.0 $\mu$m, a decarburized layer in a surface layer portion of the steel sheet has a thickness in the range of 0.01 to 10.0 $\mu$m, an oxide contained in the surface layer portion of the steel sheet has an average particle size in the range of 30 to 120 nm, the average density is 1.0 x $10^{12}$ /$m^2$ or more, and the work hardening coefficient (n-value) at the time of plastic deformation in the range of 3% to 7% is 0.080 or more on average, and the steel sheet has high ductility while maintaining high strength with a maximum tensile strength of 900 MPa or more and has good mechanical cutting characteristics.

Patent Literature 3 discloses a high-strength hot-dip galvanized steel sheet with high delayed fracture resistance, characterized in that the steel sheet includes 40% to 90% of a ferrite phase and 5% or less of a retained austenite phase in terms of volume fraction, the proportion of unrecrystallized ferrite in the entire ferrite phase is 50% or less, the grain size ratio, which is a value obtained by dividing the average grain size of crystal grains of the ferrite phase in a rolling direction by the average grain size in a sheet width direction, ranges from 0.75 to 1.33, the length ratio, which is a value obtained by dividing the average length in the rolling direction of hard microstructures dispersed in an island shape by the average length in the sheet width direction, ranges from 0.75 to 1.33, and the average aspect ratio of inclusions is 5.0 or less.

Citation List

Patent Literature

PTL 1: Japanese Patent No. 5256689
PTL 2: Japanese Patent No. 5354135
PTL 3: Japanese Patent No. 5352793

Summary of Invention

Technical Problem

However, although Patent Literature 1 discloses a high-strength hot-dip galvanized steel sheet in which both ductility, which is the press formability of the inside of the steel sheet, and stretch flangeability, which is the press formability of the end portion of the steel sheet, are improved, it cannot be said that bendability and energy absorption characteristics are sufficient.

Although Patent Literature 2 discloses a high-strength hot-dip galvanized steel sheet in which ductility is improved by the formation of retained austenite inside the steel sheet and mechanical cutting characteristics are improved by the formation of a decarburized layer in a surface layer of the steel sheet, it cannot be said that bendability and energy absorption characteristics are sufficient.

Although Patent Literature 3 discloses a high-strength hot-dip galvanized steel sheet in which ductility is improved by forming soft ferrite as a main microstructure inside the steel sheet and limiting the amount of unrecrystallized ferrite to a small amount, and delayed fracture resistance and anisotropy thereof are improved by forming a decarburized layer in a surface layer of the steel sheet, it cannot be said that bendability and energy absorption characteristics are sufficient.

Thus, it cannot be said that the steel sheets disclosed in Patent Literature 1 to Patent Literature 3 have a TS of 780 MPa or more and less than 1180 MPa, a high YS, a high total elongation and a high local elongation, and a high bendability and good energy absorption characteristics.

The present invention has been made in view of such circumstances and aims to provide a steel sheet and a member with a tensile strength TS of 780 MPa or more and less than 1180 MPa, a high yield stress YS, a high total elongation and a high local elongation, a high bendability, and good energy absorption characteristics, and methods for producing the same.

The steel sheet mentioned here also includes a galvanized steel sheet, and the galvanized steel sheet is a hot-dip galvanized steel sheet (hereinafter also referred to as GI), a hot-dip galvannealed steel sheet (hereinafter also referred to as GA), or an electrogalvanized steel sheet (hereinafter also referred to as EG).

The tensile strength TS is measured in a tensile test according to JIS Z 2241 (2011).

The phrases "high yield stress YS", "high total elongation (T-El) and local elongation (L-El)", and "high bendability and good energy absorption characteristics" mean satisfying the following.

The phrase "high yield stress YS" means that YS measured in the tensile test according to JIS Z 2241 (2011) satisfies the following formula (A) or (B) depending on TS measured in the tensile test.

(A) For 780 MPa $\leq$ TS < 980 MPa, 400 MPa $\leq$ YS $\leq$ 650 MPa
(B) For 980 MPa $\leq$ TS, 600 MPa $\leq$ YS $\leq$ 980 MPa

The total elongation has a correlation with stretch formability, and the phrase "high total elongation" means that the total elongation (T-El) measured in the tensile test according to JIS Z 2241 (2011) satisfies the following formula (A) or (B) depending on TS measured in the tensile test.

(A) For 780 MPa $\leq$ TS < 980 MPa, 17.0% $\leq$ T-El
(B) For 980 MPa $\leq$ TS, 11.0% $\leq$ T-El

The local elongation has a correlation with stretch flangeability, and a high local elongation means that the local elongation (L-El) measured in the tensile test according to JIS Z 2241 (2011) satisfies the following formula (A) or (B) depending on TS measured in the tensile test.

(A) For 780 MPa $\leq$ TS < 980 MPa, 7.0% $\leq$ L-El
(B) For 980 MPa $\leq$ TS, 5.0% $\leq$ L-El

The phrase "high bendability" means that, in a bending test according to VDA standard (VDA 238-100) defined by the German Association of the Automotive Industry, the angle (critical bending angle ($\alpha$)) outside a bend of the central portion of a plate-shaped test specimen is 80 degrees or more when the load F from a press bending jig is maximum.

The phrase "good energy absorption characteristics" means that, in a load F (N)-stroke X (mm) curve obtained in a bending test of a steel sheet according to the VDA standard (VDA 238-100) defined by the German Association of the Automotive Industry, the integral value AE (N·mm) of the load F (N) from the start of deformation to the stroke $X_{max}$ at which the load reaches the maximum satisfies the following formula (1), preferably the following formula (2).

[Math. 1]

$$5\,5\,0\,0\,0 \leq A\,E = \int_{X=0}^{X=X_{max}} F$$

$$\text{formula (1)}$$

[Math. 2]

$$6\,0\,0\,0\,0 \leq A\,E = \int_{X=0}^{X=X_{max}} F$$

$$\text{formula (2)}$$

In the formula (1) and formula (2),

F denotes the load (N),
X denotes the stroke (mm),
$X_{max}$ denotes the stroke (mm) at which the load reaches the maximum, and
AE denotes the integral value (N·mm) of the load F from the start of deformation to the stroke $X_{max}$ at which the load reaches the maximum.

Solution to Problem

As a result of extensive studies to solve the above problems, the present inventors have found the following. The chemical composition of a base steel sheet was appropriately adjusted to have a steel microstructure in which the area fractions were ferrite: 20.0% or more and 70.0% or less, a total of tempered martensite and bainitic ferrite: 20.0% or more and 70.0% or less, retained austenite: 3.0% or more and 20.0% or less, and fresh martensite: 20.0% or less (including 0.0%), the area fraction of the bainitic ferrite was 40% or more of the total area fraction of the bainitic ferrite and the tempered martensite, and a hard second phase present in the bainitic ferrite and containing the retained austenite and the fresh martensite had an average grain size of 3.0 $\mu$m or less, and the chemical composition was also appropriately adjusted so that the base steel sheet had a surface soft layer of 20 $\mu$m or more from a surface of the base steel sheet in the thickness direction, the surface soft layer being a region where the total area fraction of a non-ferrite microstructure was $S_A/2$ or less ($S_A$: the total area fraction of the non-ferrite microstructure in a cross section at a quarter thickness position), and the tensile strength was 780 MPa or more and less than 1180 MPa. As a result, it was found that a steel sheet thus produced had high YS, high press formability (bendability and ductility of the steel sheet), and good energy absorption characteristics during bending deformation.

The present invention has been accomplished on the basis of these findings, and the summary of the present invention is described below.

[1] A steel sheet including a base steel sheet, wherein the base steel sheet has a chemical composition containing, on a mass percent basis,

C: 0.05% to 0.30%,
Si: 0.10% to 2.00%,
Mn: 1.00% to 3.50%,
P: 0.001% to 0.100%,
S: 0.0001% to 0.0200%,
sol. Al: 0.005% to 2.000%, and

N: 0.010% or less,

with the remainder being Fe and incidental impurities, and

has a steel microstructure, in which area fractions at a quarter thickness position of the base steel sheet are ferrite: 20.0% or more and 70.0% or less,

a total of bainitic ferrite and tempered martensite: 20.0% or more and 70.0% or less,

retained austenite: 3.0% or more and 20.0% or less, and fresh martensite: 20.0% or less (including 0.0%),

an area fraction of the bainitic ferrite is 40% or more of a total area fraction of the bainitic ferrite and the tempered martensite, and

a hard second phase present in the bainitic ferrite and containing the retained austenite and the fresh martensite has an average grain size of 3.0 $\mu$m or less,

the steel sheet has a surface soft layer formed from a surface of the base steel sheet to a depth of 20 $\mu$m or more in a thickness direction, wherein for the steel microstructure, a total area fraction of a non-ferrite microstructure in the surface soft layer is 1/2 or less of that at the quarter thickness position, and

the steel sheet has a tensile strength of 780 MPa or more and less than 1180 MPa.

[2] The steel sheet according to [1], wherein the chemical composition further contains, on a mass percent basis,

at least one selected from
Nb: 0.200% or less,
Ti: 0.200% or less,
V: 0.200% or less,
B: 0.0100% or less,
Cr: 1.000% or less,
Ni: 1.000% or less,
Mo: 1.000% or less,
Sb: 0.200% or less,
Sn: 0.200% or less,
Cu: 1.000% or less,
Ta: 0.100% or less,
W: 0.500% or less,
Mg: 0.0200% or less,
Zn: 0.0200% or less,
Co: 0.0200% or less,
Zr: 0.1000% or less,
Ca: 0.0200% or less,
Se: 0.0200% or less,
Te: 0.0200% or less,
Ge: 0.0200% or less,
As: 0.0500% or less,
Sr: 0.0200% or less,
Cs: 0.0200% or less,
Hf: 0.0200% or less,
Pb: 0.0200% or less,
Bi: 0.0200% or less, and
REM: 0.0200% or less.

[3] The steel sheet according to [1] or [2], including a galvanized layer on one or both surfaces of the base steel sheet.

[4] A member produced by using the steel sheet according to any one of [1] to [3].

[5] A method for producing a steel sheet, the method including:

a hot rolling step of hot-rolling a steel slab with the chemical composition according to [1] or [2] to form a hot-rolled steel sheet;

a pickling step of pickling the hot-rolled steel sheet;

an annealing step of heating the steel sheet after the pickling step and annealing the steel sheet under conditions of an annealing temperature of 720°C or more and 860°C or less, a holding time of 20 seconds or more, and an atmosphere with a dew-point temperature of -10°C or more;

a rapid heating step of rapidly heating the steel sheet from the annealing temperature to the annealing temperature + 10°C or more at a heating rate of 10°C/s or more;

a first cooling step of cooling the steel sheet after the rapid heating step to a first cooling stop temperature of 400°C or more and 600°C or less;

a holding step of holding the steel sheet in a temperature range of 400°C or more and 600°C or less for a holding time of less than 300 seconds;

a second cooling step of cooling the steel sheet after the holding step to a second cooling stop temperature of 100°C or more and 300°C or less; and

a reheating and holding step of heating the steel sheet after the second cooling step to a tempering temperature of 460°C or less and holding the steel sheet in the temperature range for a tempering time of 10 seconds or more and 2000 seconds or less,

or further including

a cold rolling step of cold-rolling the steel sheet after the pickling step and before the annealing step at a rolling reduction of 20% or more and 80% or less to form a cold-rolled steel sheet.

[6] The method for producing a steel sheet according to [5], wherein a line speed LS (m/min) of the steel sheet in the annealing step satisfies the following formula (1):

$$3.0/ (t \times W \times 4.716 \times 10^{-4}) < LS < 390.0/(t \times W \times 4.716 \times 10^{-4}) \qquad \text{formula (1)}$$

wherein

t denotes the sheet thickness (mm) after the pickling step and before the annealing step, and
W denotes the sheet width (mm) after the pickling step and before the annealing step.

[7] The method for producing a steel sheet according to [5] or [6], including, after the holding step and before the second cooling step, a hot-dip galvanizing step of performing a galvanizing treatment on a surface of the steel sheet to form a galvanized layer on the surface of the steel sheet, or further including an alloying treatment step of performing an alloying treatment on the steel sheet on which the galvanized layer is formed.

[8] The method for producing a steel sheet according to [5] or [6], including, after the reheating and holding step, an electrogalvanizing step of immersing the steel sheet in an electrogalvanizing bath to form a galvanized layer on the steel sheet.

[9] A method for producing a member, the method including a step of subjecting the steel sheet according to any one of [1] to [3] to at least one of forming or joining to produce a member.

Advantageous Effects of Invention

The present invention can provide a steel sheet with a tensile strength TS of 780 MPa or more and less than 1180 MPa, a high yield stress YS, a high total elongation, a high local elongation, a high bendability, and good energy absorption characteristics. A member produced by performing forming, welding, or the like on a steel sheet according to the present invention can be suitably used as an energy-absorbing member used in the automotive field.

Description of Embodiments

The present invention will be described in detail below.

[1. Steel Sheet]

A steel sheet according to the present invention is a steel sheet including a base steel sheet, wherein the base steel sheet has a chemical composition containing, on a mass percent basis, C: 0.05% to 0.30%, Si: 0.10% to 2.00%, Mn: 1.00% to 3.50%, P: 0.001% to 0.100%, S: 0.0001% to 0.0200%, sol. Al: 0.005% to 2.000%, and N: 0.010% or less, with the remainder being Fe and incidental impurities, and has a steel microstructure, in which area fractions at a quarter thickness position of the base steel sheet are ferrite: 20.0% or more and 70.0% or less, a total of bainitic ferrite and tempered martensite: 20.0% or more and 70.0% or less, retained austenite: 3.0% or more and 20.0% or less, and fresh martensite: 20.0% or less (including 0.0%), an area fraction of the bainitic ferrite is 40% or more of a total area fraction of the bainitic ferrite and the tempered martensite, and a hard second phase present in the bainitic ferrite and containing the retained austenite and the fresh martensite has an average grain size of 3.0 $\mu$m or less, the steel sheet has a surface soft layer formed from a surface of the base steel sheet to a depth of 20 $\mu$m or more in a thickness direction, wherein for the steel microstructure, a total area fraction of a non-ferrite microstructure in the surface soft layer is 1/2 or less of that at the quarter thickness position, and the steel sheet has a tensile strength of 780 MPa or more and less than 1180 MPa.

A steel sheet according to the present invention has a tensile strength TS (the tensile strength TS is hereinafter also referred to simply as TS) of 780 MPa or more and less than 1180 MPa, has a high yield stress YS (the yield stress YS is hereinafter also referred to simply as YS), and has a high total elongation, a high local elongation, a high bendability, and good energy absorption characteristics.

The steel sheet may have a galvanized layer as an outermost surface layer on one or both surfaces of the steel sheet. A steel sheet with a galvanized layer may be a galvanized steel sheet.

More specifically, a steel sheet with a hot-dip galvanized layer among galvanized layers may be a hot-dip galvanized steel sheet.

A steel sheet with a hot-dip galvannealed layer among the galvanized layers may be a hot-dip galvannealed steel sheet.

A steel sheet with an electrogalvanized layer among the galvanized layers may be an electrogalvanized steel sheet.

Chemical Composition

First, the chemical composition of a base steel sheet of a steel sheet according to an embodiment of the present invention will be described. Although the unit in the chemical composition is "% by mass" in all cases, the unit is hereinafter simply indicated by "%" unless otherwise specified.

C: 0.05% to 0.30%

C is an element effective in forming appropriate amounts of fresh martensite, tempered martensite, bainitic ferrite, and retained austenite and ensuring a tensile strength TS of 780 MPa or more and less than 1180 MPa and a high YS. A C content of less than 0.05% results in an increase in the area fraction of ferrite and makes it difficult to achieve a TS of 780 MPa or more.

On the other hand, a C content of more than 0.30% results in an excessive increase in the area fraction of fresh martensite and makes it difficult to achieve a TS of less than 1180 MPa. Furthermore, fresh martensite may become a starting point of void formation in a VDA bending test, and the steel sheet may not have desired bendability.

Thus, the C content is 0.05% or more and 0.30% or less. The C content is preferably 0.07% or more, more preferably 0.09% or more. The C content is preferably 0.25% or less, more preferably 0.20% or less.

Si: 0.10% to 2.00%

Si suppresses the formation of carbide and promotes the formation of retained austenite during cooling and holding after annealing. Thus, Si is an element that affects the volume fraction of retained austenite. A Si content of less than 0.10% results in a decrease in the volume fraction of retained austenite and a decrease in ductility.

On the other hand, a Si content of more than 2.00% results in an excessive increase in the C concentration in austenite during annealing as the area fraction of ferrite increases, and desired local elongation cannot be achieved.

Thus, the Si content is 0.10% or more and 2.00% or less. The Si content is preferably 1.50% or less. The Si content is preferably 0.50% or more.

Mn: 1.00% to 3.50%

Mn is an element that adjusts the area fraction of ferrite, bainitic ferrite, tempered martensite, or the like. A Mn content of less than 1.00% results in an excessive increase in the area fraction of ferrite and makes it difficult to achieve a TS of 780 MPa or more.

On the other hand, a Mn content of more than 3.50% results in a decrease in the area fraction of ferrite, and a desired total elongation cannot be achieved.

Thus, the Mn content is 1.00% or more and 3.50% or less. The Mn content is preferably 2.00% or more. The Mn content is preferably 3.00% or less.

P: 0.001% to 0.100%

P is an element that has a solid-solution strengthening effect and increases TS and YS of a steel sheet. To produce such an effect, the P content is 0.001% or more.

On the other hand, when the P content is more than 0.100%, P segregates at a prior-austenite grain boundary and embrittles the grain boundary. This results in an increase in the number of voids formed in a VDA bending test, and desired bendability cannot be achieved.

Thus, the P content is 0.001% or more and 0.100% or less. The P content is preferably 0.030% or less.

S: 0.0001% to 0.0200%

S is present as a sulfide in steel. In particular, when the S content is more than 0.0200%, after the steel sheet is sheared, the number of voids formed increases, and a sheared end face cannot have desired bendability.
Thus, the S content is 0.0200% or less. The S content is preferably 0.0080% or less. The S content is 0.0001% or more due to constraints on production technology.

Sol. Al: 0.005% to 2.000%

Al suppresses the formation of carbide and promotes the formation of retained austenite during cooling and holding after annealing. Thus, Al is an element that affects the volume fraction of retained austenite. To produce such an effect, the sol. Al content is 0.005% or more.
On the other hand, a sol. Al content of more than 2.000% results in an excessive increase in the area fraction of ferrite and makes it difficult to achieve a TS of 780 MPa or more. This also results in a decrease in YS. This also excessively increases the C concentration in austenite during annealing and results in undesired bendability.
Thus, the Al content is 0.005% or more and 2.000% or less. The Al content is preferably 0.010% or more. The Al content is more preferably 0.015% or more. The Al content is preferably 1.000% or less.

N: 0.010% or less

N is present as a nitride in steel. In particular, when the N content is more than 0.010%, after the steel sheet is subjected to a VDA bending test, the number of voids formed increases, and desired bendability cannot be achieved.
Thus, the N content is 0.010% or less. The N content is preferably 0.0050% or less. The N content may have any lower limit but is preferably 0.0005% or more due to constraints on production technology.
A base chemical composition of a base steel sheet of a steel sheet according to an embodiment of the present invention has been described above. A base steel sheet of a steel sheet according to an embodiment of the present invention has a chemical composition that contains the base components and the remainder other than the base components including Fe (iron) and incidental impurities. A base steel sheet of a steel sheet according to an embodiment of the present invention preferably has a chemical composition that contains the base components and the remainder composed of Fe and incidental impurities.
A base steel sheet of a steel sheet according to an embodiment of the present invention may contain at least one selected from the following optional components in addition to the base components. The advantages of the present invention can be achieved as long as the following optional components are contained in an amount equal to or lower than the upper limit amount described below, and the lower limit is not particularly defined. The following optional elements, when contained below the appropriate lower limits described later, are contained as incidental impurities.
At least one selected from Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less

Nb: 0.200% or less

Nb increases TS and YS by forming fine carbide, nitride, or carbonitride during hot rolling or annealing. To produce such an effect, the Nb content is preferably 0.001% or more. The Nb content is more preferably 0.005% or more.
On the other hand, a Nb content of more than 0.200% may result in a large number of coarse precipitates or inclusions. In such a case, a coarse precipitate or an inclusion may become a fracture origin in a VDA bending test, and the steel sheet may not have desired bendability. Thus, when Nb is contained, the Nb content is preferably 0.200% or less. The Nb content is more preferably 0.060% or less.

Ti: 0.200% or less

Like Nb, Ti increases TS and YS by forming fine carbide, nitride, or carbonitride during hot rolling or annealing. To produce such an effect, the Ti content is preferably 0.001% or more. The Ti content is more preferably 0.005% or more.
On the other hand, a Ti content of more than 0.200% may result in a large number of coarse precipitates or inclusions. In such a case, a coarse precipitate or an inclusion may become a fracture origin in a VDA bending test, and the steel sheet may not have desired bendability. Thus, when Ti is contained, the Ti content is preferably 0.200% or less. The Ti content is more preferably 0.060% or less.

V: 0.200% or less

Like Nb or Ti, V increases TS and YS by forming fine carbide, nitride, or carbonitride during hot rolling or annealing. To produce such an effect, the V content is preferably 0.001% or more. The V content is more preferably 0.005% or more. The V content is even more preferably 0.010% or more, even further more preferably 0.030% or more.

On the other hand, a V content of more than 0.200% may result in a large number of coarse precipitates or inclusions. In such a case, a coarse precipitate or an inclusion may become a fracture origin in a VDA bending test, and the steel sheet may not have desired bendability. Thus, when V is contained, the V content is preferably 0.200% or less. The V content is more preferably 0.060% or less.

B: 0.0100% or less

B is an element that segregates at an austenite grain boundary and thereby enhances hardenability. B is also an element that suppresses the formation and grain growth of ferrite during cooling after annealing. To produce such an effect, the B content is preferably 0.0001% or more. The B content is more preferably 0.0002% or more. The B content is even more preferably 0.0005% or more, even further more preferably 0.0007% or more.

On the other hand, a B content of more than 0.0100% may result in a crack inside the steel sheet during hot rolling. Furthermore, in a VDA bending test of the steel sheet, the number of voids formed may increase, and desired bendability may not be achieved.

Thus, when B is contained, the B content is preferably 0.0100% or less. The B content is more preferably 0.0050% or less.

Cr: 1.000% or less

Cr is an element that enhances hardenability, and the addition of Cr can form a large amount of tempered martensite and ensure a TS of 780 MPa or more and a high YS. To produce such an effect, the Cr content is preferably 0.0005% or more. The Cr content is more preferably 0.010% or more. The Cr content is even more preferably 0.030% or more, even further more preferably 0.050% or more.

On the other hand, when the Cr content is more than 1.000%, the area fraction of hard fresh martensite may be excessively increased, fresh martensite may become a starting point of void formation in a VDA bending test, and the steel sheet may not have desired bendability. Thus, when Cr is contained, the Cr content is preferably 1.000% or less. The Cr content is more preferably 0.800% or less, even more preferably 0.700% or less.

Ni: 1.000% or less

Ni is an element that enhances hardenability, and the addition of Ni can form a large amount of tempered martensite and ensure a TS of 780 MPa or more and a high YS. To produce such an effect, the Ni content is preferably 0.005% or more. The Ni content is more preferably 0.020% or more. The Ni content is even more preferably 0.040% or more, even further more preferably 0.060% or more.

On the other hand, when the Ni content is more than 1.000%, the area fraction of fresh martensite may be excessively increased, fresh martensite may become a starting point of void formation in a VDA bending test, and the steel sheet may not have desired bendability.

Thus, when Ni is contained, the Ni content is preferably 1.000% or less. The Ni content is more preferably 0.800% or less. The Ni content is even more preferably 0.600% or less, even further more preferably 0.400% or less.

Mo: 1.000% or less

Mo is an element that enhances hardenability, and the addition of Mo can form a large amount of tempered martensite and ensure a TS of 780 MPa or more and a high YS. To produce such an effect, the Mo content is preferably 0.010% or more. The Mo content is more preferably 0.030% or more.

On the other hand, when the Mo content is more than 1.000%, the area fraction of fresh martensite may be excessively increased, fresh martensite may become a starting point of void formation in a VDA bending test, and the steel sheet may not have desired bendability. Thus, when Mo is contained, the Mo content is preferably 1.000% or less. The Mo content is more preferably 0.500% or less, even more preferably 0.450% or less, even more preferably 0.400% or less. The Mo content is more preferably 0.350% or less, even further more preferably 0.300% or less.

Sb: 0.200% or less

Sb is an element effective in suppressing the diffusion of C near the surface of the steel sheet during annealing and controlling the formation of a soft layer near the surface of the steel sheet. An excessive increase of a soft layer near the surface of the steel sheet makes it difficult to achieve a TS of 780 MPa or more. This also results in a decrease in YS. Thus, the Sb content is preferably 0.002% or more. The Sb content is more preferably 0.005% or more.

On the other hand, an Sb content of more than 0.200% may result in no soft layer near the surface of the steel sheet and the steel sheet with lower bendability. Thus, when Sb is contained, the Sb content is preferably 0.200% or less. The Sb content is more preferably 0.020% or less.

Sn: 0.200% or less

Like Sb, Sn is an element effective in suppressing the diffusion of C near the surface of the steel sheet during annealing and controlling the formation of a soft layer near the surface of the steel sheet. An excessive increase of a soft layer near the surface of the steel sheet makes it difficult to achieve a TS of 780 MPa or more. This also results in a decrease in YS. Thus, the Sn content is preferably 0.002% or more. The Sn content is more preferably 0.005% or more.

On the other hand, a Sn content of more than 0.200% may result in no soft layer near the surface of the steel sheet and the steel sheet with lower bendability. Thus, when Sn is contained, the Sn content is preferably 0.200% or less. The Sn content is more preferably 0.020% or less.

Cu: 1.000% or less

Cu is an element that enhances hardenability, and the addition of Cu can form a large amount of tempered martensite and ensure a TS of 780 MPa or more and a high YS. To produce such effects, the Cu content is preferably 0.005% or more. The Cu content is even more preferably 0.008% or more, even further more preferably 0.010% or more. The Cu content is more preferably 0.020% or more.

On the other hand, a Cu content of more than 1.000% may result in an excessive increase in the area fraction of fresh martensite and a large number of coarse precipitates or inclusions. In such a case, fresh martensite and a coarse precipitate or an inclusion may become starting points of void formation in a VDA bending test, and the steel sheet may not have desired bendability. Thus, when Cu is contained, the Cu content is preferably 1.000% or less. The Cu content is more preferably 0.200% or less.

Ta: 0.100% or less

Like Ti, Nb, and V, Ta increases TS and YS by forming fine carbide, nitride, or carbonitride during hot rolling or annealing. Furthermore, Ta partially dissolves in Nb carbide or Nb carbonitride and forms a complex precipitate, such as (Nb, Ta) (C, N). This suppresses coarsening of the precipitate and stabilizes precipitation strengthening. This further improves TS and YS. To produce such an effect, the Ta content is preferably 0.001% or more. The Ta content is even more preferably 0.002% or more, even further more preferably 0.004% or more.

On the other hand, a Ta content of more than 0.100% may result in a large number of coarse precipitates or inclusions. In such a case, a coarse precipitate or an inclusion may become a starting point of void formation in a VDA bending test, and the steel sheet may not have desired bendability. Thus, when Ta is contained, the Ta content is preferably 0.100% or less.

The Ta content is even more preferably 0.090% or less, even further more preferably 0.080% or less.

W: 0.500% or less

W is an element that enhances hardenability, and the addition of W can form a large amount of tempered martensite and ensure a TS of 780 MPa or more and a high YS. To produce such an effect, the W content is preferably 0.001% or more. The W content is more preferably 0.030% or more.

On the other hand, when the W content is more than 0.500%, the area fraction of hard fresh martensite may be excessively increased, fresh martensite may become a starting point of void formation in a VDA bending test, and the steel sheet may not have desired bendability. Thus, when W is contained, the W content is preferably 0.500% or less. The W content is more preferably 0.450% or less, even more preferably 0.400% or less. The W content is even further more preferably 0.300% or less.

Mg: 0.0200% or less

Mg is an element effective in spheroidizing the shape of an inclusion, such as sulfide or oxide, and improving the bendability of a sheared end face. To produce such an effect, the Mg content is preferably 0.0001% or more. The Mg content is more preferably 0.0005% or more, even more preferably 0.0010% or more.

On the other hand, a Mg content of more than 0.0200% may result in a large number of coarse precipitates or inclusions. In such a case, a coarse precipitate or an inclusion may become a starting point of void formation in a VDA bending test, and the steel sheet may not have desired bendability. Thus, when Mg is contained, the Mg content is preferably 0.0200% or less. The Mg content is more preferably 0.0180% or less, even more preferably 0.0150% or less.

Zn: 0.0200% or less

Zn is an element effective in spheroidizing the shape of an inclusion and improving the bendability of a sheared end face. To produce such effects, the Zn content is preferably 0.0010% or more. The Zn content is more preferably 0.0020% or more, even more preferably 0.0030% or more.

On the other hand, a Zn content of more than 0.0200% may result in a large number of coarse precipitates or inclusions. In such a case, a coarse precipitate or an inclusion may become a starting point of void formation in a VDA bending test, and the steel sheet may not have desired bendability. Thus, when Zn is contained, the Zn content is preferably 0.0200% or less. The Zn content is more preferably 0.0180% or less, even more preferably 0.0150% or less.

Co: 0.0200% or less

Like Zn, Co is an element effective in spheroidizing the shape of an inclusion and improving the bendability of a sheared end face. To produce such an effect, the Co content is preferably 0.0010% or more. The Co content is more preferably 0.0020% or more, even more preferably 0.0030% or more.

On the other hand, a Co content of more than 0.0200% may result in a large number of coarse precipitates or inclusions. In such a case, a coarse precipitate or an inclusion may become a starting point of void formation in a VDA bending test, and the steel sheet may not have desired bendability. Thus, when Co is contained, the Co content is preferably 0.0200% or less. The Co content is more preferably 0.0180% or less, even more preferably 0.0150% or less.

Zr: 0.1000% or less

Like Zn and Co, Zr is an element effective in spheroidizing the shape of an inclusion and improving the bendability of a sheared end face. To produce such an effect, the Zr content is preferably 0.0010% or more.

On the other hand, a Zr content of more than 0.1000% may result in a large number of coarse precipitates or inclusions. In such a case, a coarse precipitate or an inclusion may become a starting point of void formation in a VDA bending test, and the steel sheet may not have desired bendability. Thus, when Zr is contained, the Zr content is preferably 0.1000% or less.

The Zr content is more preferably 0.0300% or less, even more preferably 0.0100% or less.

Ca: 0.0200% or less

Ca is present as an inclusion in steel. A Ca content of more than 0.0200% results in a large number of coarse inclusions. In such a case, a coarse precipitate or an inclusion may become a starting point of void formation in a VDA bending test, and the steel sheet may not have desired bendability. Thus, when Ca is contained, the Ca content is preferably 0.0200% or less. The Ca content is preferably 0.0020% or less.

The Ca content may have any lower limit and is preferably 0.0005% or more. The Ca content is preferably 0.0010% or more due to constraints on production technology.

Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less

Se, Te, Ge, As, Sr, Cs, Hf, Pb, Bi, and REM are elements effective in improving bendability in a VDA test. To produce such an effect, each of the Se, Te, Ge, As, Sr, Cs, Hf, Pb, Bi, and REM contents is preferably 0.0001% or more. On the other hand, Se, Te, Ge, Sr, Cs, Hf, Pb, Bi, and REM contents each exceeding 0.0200% or an As content of more than 0.0500% may result in a large number of coarse precipitates or inclusions. In such a case, a coarse precipitate or an inclusion may become a starting point of void formation in a VDA bending test, and the steel sheet may not have desired bendability. Thus, when at least one of Se, Te, Ge, As, Sr, Cs, Hf, Pb, Bi, and REM is contained, each of the Se, Te, Ge, As, Sr, Cs, Hf, Pb, Bi, and REM contents is preferably 0.0200% or less, and the As content is preferably 0.0500% or less.

The Se content is more preferably 0.0005% or more, even more preferably 0.0008% or more.

The Se content is more preferably 0.0180% or less, even more preferably 0.0150% or less.

The Te content is more preferably 0.0005% or more, even more preferably 0.0008% or more.

The Te content is more preferably 0.0180% or less, even more preferably 0.0150% or less.

The Ge content is more preferably 0.0005% or more, even more preferably 0.0008% or more.

The Ge content is more preferably 0.0180% or less, even more preferably 0.0150% or less.

The As content is more preferably 0.0010% or more, even more preferably 0.0015% or more.

The As content is more preferably 0.0400% or less, even more preferably 0.0300% or less.

The Sr content is more preferably 0.0005% or more, even more preferably 0.0008% or more.

The Sr content is more preferably 0.0180% or less, even more preferably 0.0150% or less.

The Cs content is more preferably 0.0005% or more, even more preferably 0.0008% or more.

The Cs content is more preferably 0.0180% or less, even more preferably 0.0150% or less.

The Hf content is more preferably 0.0005% or more, even more preferably 0.0008% or more.

The Hf content is more preferably 0.0180% or less, even more preferably 0.0150% or less.

The Pb content is more preferably 0.0005% or more, even more preferably 0.0008% or more.

The Pb content is more preferably 0.0180% or less, even more preferably 0.0150% or less.

The Bi content is more preferably 0.0005% or more, even more preferably 0.0008% or more.

Bi is more preferably 0.0180% or less, even more preferably 0.0150% or less.

The REM content is more preferably 0.0005% or more, even more preferably 0.0008% or more.

The REM content is more preferably 0.0180% or less, even more preferably 0.0150% or less.

The term "REM", as used herein, refers to scandium (Sc) with an atomic number of 21, yttrium (Y) with an atomic number of 39, and lanthanoids from lanthanum (La) with an atomic number of 57 to lutetium (Lu) with an atomic number of 71. The term "REM content", as used herein, refers to the total content of one or two or more elements selected from the above-described REM. REM is preferably, but not limited to, La and/or Ce.

A base steel sheet of a steel sheet according to the present invention has a chemical composition containing, on a mass percent basis, C: 0.05% to 0.30%, Si: 0.10% to 2.00%, Mn: 1.00% to 3.50%, P: 0.001% to 0.100%, S: 0.0001% to 0.0200%, sol. Al: 0.005% to 2.000%, and N: 0.010% or less, and optionally at least one selected from Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less, the remainder being Fe and incidental impurities.

Steel Microstructure

Next, the steel microstructure of a steel sheet (base steel sheet) according to an embodiment of the present invention will be described.

A steel sheet according to the present invention has a steel microstructure in which area fractions at a quarter thickness position of the base steel sheet are ferrite: 20.0% or more and 70.0% or less, a total of bainitic ferrite and tempered martensite: 20.0% or more and 70.0% or less, retained austenite: 3.0% or more and 20.0% or less, and fresh martensite: 20.0% or less (including 0.0%), the area fraction of the bainitic ferrite is 40% or more of the total area fraction of the bainitic ferrite and the tempered martensite, and a hard second phase present in the bainitic ferrite and containing the retained austenite and the fresh martensite has an average grain size of 3.0 $\mu$m or less.

Area fraction of ferrite: 20.0% or more and 70.0% or less

Soft ferrite is a phase that improves ductility. From the perspective of ensuring high ductility, the area fraction of ferrite is 20.0% or more. The area fraction of ferrite is preferably 30.0% or more, more preferably 40.0% or more.

On the other hand, when the area fraction of ferrite is excessively increased, it is difficult to achieve a TS of 780 MPa or more. Thus, the area fraction of ferrite is 70.0% or less. The area fraction of ferrite is preferably 60.0% or less, more preferably 50.0% or less.

Total area fraction of bainitic ferrite and tempered martensite (excluding retained austenite): 20.0% or more and 70.0% or less

Bainitic ferrite and tempered martensite have an intermediate hardness between soft ferrite and hard fresh martensite and the like and are important phases to provide a steel sheet with high yield stress (YS). It is also important to ensure the TS. Thus, the total area fraction of bainitic ferrite and tempered martensite is 20.0% or more, preferably 30.0% or more, more preferably 40% or more.

On the other hand, an excessive increase in the total area fraction of bainitic ferrite and tempered martensite results in a decrease in the total elongation and/or the local elongation. Thus, the total area fraction of bainitic ferrite and tempered martensite is 70.0% or less. The total area fraction of bainitic ferrite and tempered martensite is preferably 60.0% or less, more preferably 50.0% or less. The term "bainitic ferrite" refers to upper bainitic ferrite that is formed in a relatively high temperature region and has a small amount of carbide.

Area fraction of retained austenite: 3.0% or more and 20.0% or less

From the perspective of achieving high ductility, the area fraction of retained austenite is 3.0% or more. The area fraction of retained austenite is preferably 5.0% or more, more preferably 7.0% or more.

On the other hand, when the area fraction of retained austenite is excessively increased, fresh martensite formed by deformation-induced transformation at the time of shearing becomes a starting point of void formation, and a desired local elongation (L-El) cannot be achieved. Thus, the area fraction of retained austenite is 20.0% or less. The area fraction of retained austenite is preferably 15.0% or less, more preferably 10.0% or less.

Area fraction of fresh martensite: 20.0% or less (including 0.0%)

When the area fraction of fresh martensite is excessively increased, the fresh martensite becomes a starting point of void formation in a bending test according to the VDA standard (VDA 238-100) defined by the German Association of the Automotive Industry, and the steel sheet cannot have the desired bendability (the critical bending angle ($\alpha$) in the VDA bending test). From the perspective of providing a steel sheet with a high bendability, the area fraction of fresh martensite is 15.0% or less, preferably 10.0% or less. The lower limit of the area fraction of fresh martensite may be, but is not limited to, 0.0%.

The term "fresh martensite" refers to as-quenched (untempered) martensite.

Ratio of area fraction of bainitic ferrite to total area fraction of bainitic ferrite and tempered martensite: 40% or more

Bainitic ferrite contributes to an improvement in ductility. When the area fraction of bainitic ferrite is less than 40% of the total area fraction of bainitic ferrite and tempered martensite, the effect of improving the ductility cannot be sufficiently achieved. Thus, the area fraction of bainitic ferrite is 40% or more, preferably 50% or more, more preferably 60% or more, of the total area fraction of bainitic ferrite and tempered martensite.

Although the upper limit of the ratio of the area fraction of bainitic ferrite to the total area fraction of bainitic ferrite and tempered martensite is not particularly limited, an excessive increase in the upper limit may result in a decrease in tensile strength (TS), the upper limit is preferably 90% or less, more preferably 80% or less.

Average grain size of hard second phase present in bainitic ferrite and containing retained austenite and fresh martensite: 3.0 $\mu$m or less

Among hard second phases containing retained austenite and fresh martensite, a hard second phase present in bainitic ferrite has a high solute C (solute carbon) concentration. Thus, retained austenite has high stability and improves the total elongation by deformation-induced transformation, and fresh martensite is hard but improves the TS while ensuring the local elongation by being in contact with bainitic ferrite, which is an intermediate hardness phase. Thus, the hard second phase plays a very important role in ensuring the total elongation and the TS.

When the retained austenite and fresh martensite present in the bainitic ferrite have an average grain size of more than 3.0 $\mu$m, however, the hard fresh martensite and/or the interface between the bainitic ferrite and hard fresh martensite formed by deformation-induced transformation of the retained austenite becomes a starting point of void formation and decreases the local elongation in a tensile test. Thus, the hard second phase present in the bainitic ferrite and containing the retained austenite and the fresh martensite has an average grain size of 3.0 $\mu$m or less, preferably 2.0 $\mu$m or less, more preferably 1.0 $\mu$m or less.

Although the lower limit is not particularly limited, the hard second phase present in the bainitic ferrite may have an average grain size of 0.1 $\mu$m or more or 0.3 $\mu$m or more.

In the present invention, the hard second phase contains retained austenite and fresh martensite and may be composed of retained austenite and fresh martensite.

The area fraction of the remaining microstructure other than the above is preferably 20.0% or less. The area fraction of the remaining microstructure is more preferably 10.0% or less. The area fraction of the remaining microstructure may be 0.0%.

The remaining microstructure is, for example, but not limited to, carbide, such as pearlite or cementite. The type of the remaining microstructure can be determined, for example, by scanning electron microscope (SEM) observation.

Surface soft layer: total area fraction of non-ferrite microstructure is 1/2 or less of that at quarter thickness position

The surface soft layer contributes to the suppression of the progress of bending cracks during press forming and in case of a vehicle body collision and improves the energy absorption characteristics during bending deformation. The surface soft layer means a decarburized layer and is a surface layer region in which the total area fraction of a non-ferrite microstructure is $S_A/2$ or less, wherein $S_A$ denotes the total area fraction of the non-ferrite microstructure in a cross section at a quarter thickness position.

To provide the steel sheet with good energy absorption characteristics during bending deformation, the surface soft layer is formed in a region of 20 $\mu$m or more from the surface of the base steel sheet in the sheet thickness direction. The surface soft layer preferably has a thickness of 25 $\mu$m or more, more preferably 30 $\mu$m or more. Although the upper limit of the thickness of the surface soft layer is not particularly limited, since excessive formation of the surface soft layer results in a decrease in TS, the upper limit is preferably 200 $\mu$m or less, more preferably 150 $\mu$m or less, even more preferably 120 $\mu$m or less.

The quarter thickness position of the steel sheet at which the total area fraction $S_A$ of the non-ferrite microstructure is measured is a non-surface soft layer (a layer in which the microstructure is not changed by decarburization and which does not satisfy the conditions of the surface soft layer defined in the present invention).

Here, the area fractions of ferrite, bainitic ferrite, tempered martensite, and a hard phase (hard second phase (retained austenite + fresh martensite)) at the quarter thickness position of the base steel sheet are measured as described below.

That is, a sample is cut out from a base steel sheet to form a thickness cross section parallel to the rolling direction of the base steel sheet as an observation surface. The observation surface of the sample is then mirror-polished with a diamond paste. The observation surface of the sample is then subjected to final polishing with colloidal silica and is then etched with 3% by volume nital to expose the microstructure.

Three visual fields of 25.6 $\mu$m x 17.6 $\mu$m are then photographed with a scanning electron microscope (SEM) under the conditions of an acceleration voltage of 15 kV and a magnification of 5000 times at the position of the outermost surface layer of the observation surface of the sample and at the quarter thickness position.

From a microstructure image thus photographed, ferrite, bainitic ferrite, tempered martensite, and the hard phase (hard second phase (retained austenite + fresh martensite)) are identified as described below.

Ferrite: A region with a black color and with a massive form. Almost no iron-based carbide is contained. When an iron-based carbide is contained, however, the area of ferrite includes the area of the iron-based carbide. The same applies to bainitic ferrite and tempered martensite described later.

Bainitic ferrite: A region with a black to dark gray color and with a massive form, an indefinite form, or the like. No or a relatively small amount of iron-based carbide is contained.

Tempered martensite: A region with a gray color and with an indefinite form. A relatively large amount of iron-based carbide is contained.

Hard phase (hard second phase (retained austenite + fresh martensite)): A region with a white to light gray color and with an indefinite form. No iron-based carbide is contained. A relatively large one may have a gradually darker color with increasing distance from the interface with another microstructure and may have a dark gray interior.

Carbide: A region with a white color and with a dot-like or linear form. It is contained in tempered martensite, bainitic ferrite, and ferrite.

Remaining microstructure: Pearlite, internal oxide, or the like with a known form and the like.

Next, the region of each phase identified in the microstructure image is subjected to calculation by the following method. The area fractions of ferrite, bainitic ferrite, tempered martensite, and the hard phase (hard second phase) were examined by a point counting method in which 20 x 20 grids were placed at equal intervals on a region with an actual length of 25.6 $\mu$m x 19.2 $\mu$m on the 5000x SEM image, and the number of points on each phase was counted. Each area fraction is the average value of three area fractions determined from different 5000x SEM images.

The average grain size of the hard second phase in the bainitic ferrite is measured as described below.

In the microstructure image, bainitic ferrite is identified in the manner described above, and the hard second phase included in the bainitic ferrite region is identified.

The long diameter and the short diameter of the hard second phase included in the bainitic ferrite region are measured, and a value calculated by adding the long diameter and the short diameter and dividing the sum by 2 is defined as the grain size.

In the 5000x SEM image, among the hard second phases included in the bainitic ferrite region with the largest continuous area, 10 hard second phases with a larger grain size are selected to measure the average grain size thereof. At this time, when 10 hard second phases are not included in the bainitic ferrite region, the average grain size of all the hard second phases is measured. Then, a value calculated by further averaging three average grain sizes determined by the same procedure for three different SEM images is defined as the average grain size of the hard second phase in the bainitic ferrite.

The area fraction of retained austenite is measured as described below.

The base steel sheet is mechanically ground to a quarter thickness position in the sheet thickness direction (depth direction) and is then chemically polished with oxalic acid to form an observation surface. The observation surface is then observed by X-ray diffractometry. A MoK$\alpha$ ray is used as an incident X-ray, the ratio of the diffraction intensity of each of the (200), (220), and (311) planes of fcc iron (austenite) to the diffraction intensity of each of the (200), (211), and (220) planes of bcc iron is determined to calculate the volume fraction of retained austenite from the ratio of the diffraction intensity of each plane. Assuming that the retained austenite is three-dimensionally homogeneous, the volume fraction of the retained austenite is defined as the area fraction of the retained austenite.

The area fraction of fresh martensite is determined by subtracting the area fraction of retained austenite from the area fraction of the hard phase (hard second phase) determined as described above.

[Area fraction of fresh martensite (%)] = [area fraction of hard second phase (%)] - [area fraction of retained austenite (%)]

The area fraction of the remaining microstructure is calculated by subtracting the area fraction of ferrite, the area fraction of bainitic ferrite, the area fraction of tempered martensite, and the area fraction of the hard phase (hard second phase) determined as described above from 100.0%.

[Area fraction of remaining microstructure (%)] = 100.0 - [area fraction of ferrite (%)] - [area fraction of bainitic ferrite (%)] - [area fraction of tempered martensite (%)] - [area fraction of hard second phase (%)]

To measure the microstructure in the surface soft layer, in a case where a galvanized layer is formed on the steel sheet, first, the galvanized layer is removed, and the microstructure is measured in the same manner as at the quarter thickness position at intervals of 1 $\mu$m from a position of 1 $\mu$m from the surface of the base steel sheet in the sheet thickness direction to a position of 100 $\mu$m in the sheet thickness direction. The measurement is then performed at intervals of 20 $\mu$m up to the center of the sheet thickness.

Next, mechanical characteristics of a steel sheet according to an embodiment of the present invention will be described.

Tensile strength (TS): 780 MPa or more and less than 1180 MPa

A steel sheet according to an embodiment of the present invention has a tensile strength TS of 780 MPa or more and less than 1180 MPa.

The yield stress (YS), the total elongation (TE-I), and the local elongation (L-El) of a steel sheet according to an embodiment of the present invention, and the bendability and the energy absorption characteristics during bending deformation of the steel sheet are as described above.

The tensile strength (TS), the yield stress (YS), the total elongation (T-El), and the local elongation (L-El) are measured in the tensile test according to JIS Z 2241 (2011) described later in Examples. The bendability and the energy absorption characteristics during bending deformation of the steel sheet are measured in a VDA bending test described later in Examples.

Galvanized Layer

A steel sheet according to an embodiment of the present invention may have a galvanized layer formed on a base steel sheet, and the galvanized layer may be provided on only one surface of the base steel sheet or may be provided on both surfaces thereof.

The term "galvanized layer", as used herein, refers to a coated layer containing Zn as a main component (Zn content: 50.0% by mass or more), for example, a hot-dip galvanized layer, a hot-dip galvannealed layer, or an electrogalvanized layer.

The hot-dip galvanized layer is preferably composed of, for example, Zn, 20.0% by mass or less of Fe, and 0.001% by mass or more and 1.0% by mass or less of Al. The hot-dip galvanized layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% by mass or more and 3.5% by mass or less. The Fe content of the hot-dip galvanized layer is more preferably less than 7.0% by mass. The remainder other than the above elements is incidental impurities.

The hot-dip galvannealed layer is preferably composed of, for example, Zn, 20% by mass or less of Fe, and 0.001% by mass or more and 1.0% by mass or less of Al. The hot-dip galvannealed layer may optionally contain one or two or more elements selected from the group consisting of Pb, Sb, Si, Sn, Mg, Mn, Ni, Cr, Co, Ca, Cu, Li, Ti, Be, Bi, and REM in a total amount of 0.0% by mass or more and 3.5% by mass or less. The Fe content of the hot-dip galvannealed layer is more preferably 7.0% by mass or more, even more preferably 8.0% by mass or more. The Fe content of the hot-dip galvannealed layer is more preferably 15.0% by mass or less, even more preferably 12.0% by mass or less. The remainder other than the above elements is incidental impurities.

The electrogalvanized layer is preferably composed of, for example, Zn and 9.0% by mass or more and 25.0% by mass or less of Ni. The remainder other than the above elements is incidental impurities.

Furthermore, the coating weight per side of the hot-dip galvanized layer and the hot-dip galvannealed layer is preferably, but not limited to, 20 g/m$^2$ or more. The coating weight per side of the hot-dip galvanized layer and the hot-dip galvannealed layer is preferably 80 g/m$^2$ or less. Furthermore, the coating weight per side of the electrogalvanized layer is preferably, but not limited to, 10 g/m$^2$ or more. The coating weight per side of the electrogalvanized layer is preferably 70 g/m$^2$ or less.

The coating weight of the galvanized layer (the hot-dip galvanized layer, the hot-dip galvannealed layer, or the electrogalvanized layer) is measured as described below.

That is, a treatment liquid is prepared by adding 0.6 g of a corrosion inhibitor for Fe ("IBIT 700BK" (registered trademark) manufactured by Asahi Chemical Co., Ltd.) to 1 L of 10% by mass aqueous hydrochloric acid. The steel sheet as a sample is immersed in the treatment liquid to dissolve the galvanized layer. The mass loss of the sample material due to the dissolution is then measured and is divided by the surface area of the base steel sheet (the surface area of the coated portion) to calculate the coating weight (g/m$^2$).

The thickness of a steel sheet according to an embodiment of the present invention is preferably, but not limited to, 0.6 mm or more, more preferably 0.8 mm or more. The thickness is even more preferably 1.0 mm or more, most preferably 1.2 mm or more.

The steel sheet preferably has a thickness of 3.5 mm or less. The thickness is more preferably 2.3 mm or less.

The width of a steel sheet according to the present invention is preferably, but not limited to, 500 mm or more, more preferably 750 mm or more. The steel sheet preferably has a width of 1600 mm or less, more preferably 1450 mm or less.

[2. Method for Producing Steel Sheet]

Next, a method for producing a steel sheet according to an embodiment of the present invention will be described.

A method for producing a steel sheet according to an embodiment of the present invention includes a hot rolling step of hot-rolling a steel slab with the chemical composition described above to form a hot-rolled steel sheet, a pickling step of pickling the hot-rolled steel sheet, an annealing step of annealing the steel sheet after the pickling step under conditions of an annealing temperature of 720°C or more and 860°C or less, a holding time of 20 seconds or more, and an atmosphere with a dew-point temperature of -10°C or more,

a rapid heating step of rapidly heating the steel sheet from the annealing temperature to the annealing temperature + 10°C or more at a heating rate of 10°C/s or more, a first cooling step of cooling the steel sheet after the rapid heating step to a first cooling stop temperature of 400°C or more and 600°C or less, a holding step of holding the steel sheet in a temperature range of 400°C or more and 600°C or less for a holding time of less than 300 seconds, a second cooling step of cooling the steel sheet after the holding step to a second cooling stop temperature of 100°C or more and 300°C or less, and a reheating and holding step of heating the steel sheet after the second cooling step to a tempering temperature of 460°C or less and holding the steel sheet in the temperature range for a tempering time of 10 seconds or more and 2000 seconds or less, or further including a cold rolling step of cold-rolling the steel sheet after the pickling step and before the annealing step at a rolling reduction of 20% or more and 80% or less to form a cold-rolled steel sheet.

The line speed LS (m/min) of the steel sheet in the annealing step preferably satisfies the following formula (1):

$$3.0/(t \times W \times 4.716 \times 10^{-4}) < LS < 390.0/(t \times W \times 4.716 \times 10^{-4}) \qquad \text{formula (1)}$$

wherein t denotes the sheet thickness (mm) after the pickling step and before the annealing step, and W denotes the sheet thickness (mm) after the pickling step and before the annealing step.

Unless otherwise specified, the temperatures described above mean the surface temperatures of a steel slab and a steel sheet.

First, a steel slab with the chemical composition described above is prepared. For example, a steel material is melted to produce a molten steel with the chemical composition described above. The melting method may be, but is not limited to, any known melting method using a converter, an electric arc furnace, or the like. The resulting molten steel is then solidified into a steel slab. A steel slab can be produced from molten steel by any method, for example, a continuous casting method, an ingot casting method, a thin slab casting method, or the like. From the perspective of preventing macrosegregation, it is preferable to employ a continuous casting method as a method for producing a steel slab from molten steel.

(Hot Rolling Step)

Next, in the hot rolling step, the steel slab is hot-rolled to produce a hot-rolled steel sheet.

The hot rolling may be performed in an energy-saving process. The energy-saving process may be hot charge rolling (a method of charging a furnace with the steel slab as a hot piece not cooled to room temperature and hot-rolling the steel slab), hot direct rolling (a method of immediately rolling the steel slab after a short heat retention of the steel slab), or the like.

The hot rolling may be performed under any conditions, for example, under the following conditions.

That is, the steel slab is temporarily cooled to room temperature and is then reheated and rolled. The slab heating temperature (reheating temperature) is preferably 1100°C or more from the perspective of melting carbide and reducing rolling force. Furthermore, to prevent an increase in scale loss, the slab heating temperature is preferably 1300°C or less. The slab heating temperature is based on the temperature of the steel slab surface.

The steel slab is then rough-rolled in the usual manner to form a rough-rolled sheet (hereinafter also referred to as a sheet bar). The sheet bar is then finish-rolled to form a hot-rolled steel sheet. When the slab heating temperature is relatively low, it is preferable to heat the sheet bar using a bar heater or the like before the finish rolling from the perspective of preventing trouble during the finish rolling. The finish rolling temperature is preferably 800°C or more to reduce the rolling load. Furthermore, when the rolling reduction of austenite in an unrecrystallized state is increased, an abnormal microstructure elongated in the rolling direction may be developed and impair the workability of an annealed sheet. Furthermore, at a finish rolling temperature of 800°C or more, not only the steel microstructure of the hot-rolled steel sheet but also the steel microstructure of the final product is likely to be uniform. A nonuniform steel microstructure tends to result in a decrease in bendability.

On the other hand, at a finish rolling temperature of more than 950°C, the amount of oxide (scale) formed increases. This may roughen the interface between a steel substrate and the oxide and impair the surface quality of the steel sheet after pickling and cold rolling. This may also coarsen crystal grains and reduce the strength and bendability of the steel sheet. Thus, the finish rolling temperature is preferably 950°C or less. Thus, the finish rolling temperature is preferably 800°C or more and 950°C or less.

After the finish rolling, the hot-rolled steel sheet is coiled. The coiling temperature is preferably 450°C or more. The coiling temperature is preferably 750°C or less.

Sheet bars may be joined together during hot rolling to continuously perform the finish rolling. The sheet bar may be temporarily coiled before the finish rolling. Furthermore, to reduce the rolling force during hot rolling, part or all of the finish rolling may be lubricated rolling. The lubricated rolling is also effective in making the shape and the material quality of a steel sheet uniform. The friction coefficient during the lubricated rolling is preferably 0.10 or more and 0.25 or less.

In the hot rolling step including rough rolling and finish rolling (hot rolling step), the steel slab is typically formed into a sheet bar by the rough rolling and then into a hot-rolled steel sheet by the finish rolling. Depending on the mill capacity or the like, however, such classification is not concerned, provided that a predetermined size is obtained.

(Pickling Step)

The hot-rolled steel sheet after the hot rolling step is pickled. The pickling can remove an oxide from the surface of the steel sheet and ensure high chemical convertibility and coating quality. The pickling may be performed once or multiple times. The pickling may be performed under any conditions and may be performed in the usual manner.

(Cold Rolling Step)

Next, when necessary, the hot-rolled steel sheet is cold-rolled to produce a cold-rolled steel sheet. The cold rolling is performed, for example, by multi-pass rolling requiring two or more passes, such as tandem multi-stand rolling or reverse rolling.

The rolling reduction (cumulative rolling reduction ratio) of the cold rolling is 20% or more and 80% or less. When the rolling reduction of the cold rolling is less than 20%, coarsening and non-uniformity of the steel microstructure are likely to occur in the annealing step, and the final product may have a decrease in TS and bendability. On the other hand, a rolling reduction of more than 80% in the cold rolling tends to result in a steel sheet with a shape defect and may result in an uneven galvanized coating weight.

Optionally, the cold-rolled steel sheet after the cold rolling may be pickled.

(Annealing Step)

Next, in an embodiment of the present invention, after the pickling step (when cold rolling is performed, after the cold rolling step, the steel sheet thus produced is heated and annealed (held) at an annealing temperature of 720°C or more and 860°C or less for a holding time (annealing time) of 20 seconds or more. The annealing may be performed twice or more but is preferably performed once from the perspective of energy efficiency. The annealing step is a step including the heating treatment and soaking treatment.

Annealing temperature: 720°C or more and 860°C or less

An annealing temperature of less than 720°C results in a decrease in the oxidation reaction rate of carbon in the surface layer of the steel sheet, and a desired surface soft layer thickness cannot be achieved. Furthermore, the formation ratio of austenite during heating in a two-phase region of ferrite and austenite may be insufficient. This may result in an excessive increase in the area fraction of ferrite and a decrease in TS after the heat treatment.

On the other hand, an annealing temperature of more than 860°C results in an increase in the fraction of austenite in which the diffusion rate of carbon is slow, a decrease in the diffusion rate of carbon to the surface layer in which the decarburization reaction proceeds, resulting in a diffusion-limited reaction, so that a desired surface soft layer thickness cannot be achieved. Furthermore, the formation ratio of austenite may become excessive during annealing, and the area fraction of ferrite after heat treatment may be less than 20.0%.

Thus, the annealing temperature is 720°C or more and 860°C or less. The annealing temperature is preferably 850°C or less.

The annealing temperature is the highest temperature reached in the annealing step.

Holding time (annealing time): 20 seconds or more

A holding time of less than 20 seconds results in an insufficient time for the decarburization reaction to occur in the surface layer, and a desired surface soft layer thickness cannot be achieved. Thus, the holding time (annealing time) is 20 seconds or more. The holding time is preferably 30 seconds or more, more preferably 50 seconds or more. The holding time may have any upper limit and is preferably 900 seconds or less, more preferably 800 seconds or less.

The term "holding time" refers to the holding time in the temperature range of (annealing temperature - 40°C) or more and the annealing temperature or less. That is, the holding time (annealing time) includes, in addition to the holding time at the annealing temperature, the residence time in the temperature range of (annealing temperature - 40°C) or more and the annealing temperature or less in the heating before reaching the annealing temperature.

Dew-point temperature of atmosphere of annealing step (annealing atmosphere): -10°C or more

In an embodiment of the present invention, the dew-point temperature of the atmosphere in the annealing step (annealing atmosphere) is -10°C or more. Annealing with a dew-point temperature of -10°C or more in the annealing atmosphere in the annealing step can promote the decarburization reaction and form a surface soft layer with a desired thickness. The dew-point temperature of the annealing atmosphere in the annealing step is more preferably 0°C or more, even more preferably 5°C or more, even further more preferably 10°C or more.

The dew-point temperature of the annealing atmosphere in the annealing step may have any upper limit but is preferably 30°C or less to improve the coating adhesion when the galvanized layer is provided.

$$3.0/(t \times W \times 4.716 \times 10^{-4}) < LS < 390.0/(t \times W \times 4.716 \times 10^{-4}) \qquad \text{formula (1)}$$

In the present invention, from the perspective of production efficiency, the line speed LS (m/min) of the steel sheet in the annealing step preferably satisfies the formula (1).

In the formula (1), t denotes the sheet thickness (mm), and W denotes the sheet width (mm).

The sheet thickness t is the sheet thickness after the pickling step and before the annealing step, and the sheet width W is the sheet width after the pickling step and before the annealing step.

The production efficiency can be E represented by the following formula (2):

$$E \ (ton/h) = LS \times t \times W \times \rho \times 60 \times 10^{-6} \qquad \text{formula (2)}$$

wherein t denotes the sheet thickness (mm), W denotes the sheet width (mm), $\rho$ denotes the specific gravity of iron (ton/m$^3$), and $\rho$ = 7.86 (ton/m$^3$).

In this case, E is preferably more than 3.0 and less than 390.0.

The above formula (1) can be derived from the formula (2).

E of 3.0 ton/h or less may result in an insufficient TS due to excessive formation of the surface soft layer.

On the other hand, E of 390.0 ton/h or more may result in insufficient formation of the surface soft layer and inadequate energy absorption characteristics during bending deformation.

Thus, E is preferably more than 3.0 and less than 390.0.

E is more preferably 16.0 ton/h or more. E is more preferably 190.0 ton/h or less.

From the above, LS (m/min) is preferably more than 3.0/(t × W × 4.716 × 10$^{-4}$). LS (m/min) is more preferably 16.0/(t × W × 4.716 × 10$^{-4}$) or more.

LS (m/min) is preferably less than 390.0/(t × W × 4.716 × 10$^{-4}$).

LS (m/min) is more preferably 190.0/(t × W × 4.716 × 10$^{-4}$) or less.

The line speed LS (m/min) is calculated by the distance (m) by which the steel sheet is conveyed in the annealing step/the time (min) required for conveying the steel sheet in the annealing step.

A heat treatment furnace in the annealing step is typically a radiant tube furnace. The annealing temperature can be determined with a thermometer that measures the surface temperature of the steel sheet. The method of temperature measurement is suitably, for example, but not limited to, a radiation thermometer that measures the temperature by sensing infrared radiation emitted by the steel sheet. When a radiation thermometer is used, a cover may be provided between a measurement unit of the radiation thermometer and a detection portion of the steel sheet because the radiation thermometer may be affected by reflected light of infrared radiation emitted from a surrounding furnace body. Furthermore, since there is an influence of the emissivity of the surface of the steel sheet, a multiple reflection type measurement method utilizing a wedge-shaped space between a furnace feed roller and the steel sheet may be adopted.

(Rapid Heating Step)

In an embodiment of the present invention, after the annealing step, a steel sheet produced as described above is heated (rapidly heated) from the annealing temperature to the annealing temperature + 10°C or more at a heating rate of 10°C/s or more.

When annealing is performed twice or more in the above-described annealing step, treatment in a rapid heating step performed after the annealing may be performed in the same manner twice or more, and the treatment in the rapid heating step may be performed once.

Heating rate from annealing temperature: 10°C/s or more

When the heating rate from the annealing temperature in the rapid heating step is less than 10°C/s, Mn diffuses from ferrite to austenite formed in the rapid heating step and decreases the amount of bainitic ferrite formed in the subsequent cooling step and holding step, and a microstructure in which the area fraction of bainitic ferrite is 40% or more of the total area fraction of bainitic ferrite and tempered martensite cannot be formed. Thus, the heating rate from the annealing temperature in the rapid heating step is 10°C/s or more.

Furthermore, the heating rate in the rapid heating step is preferably 30°C/s or more. At a heating rate of 30°C/s or more, the diffusion of Mn from ferrite to austenite can be suppressed, austenite can be formed only by the diffusion of C, and the line length can be further shortened.

On the other hand, a heating rate of more than 300°C/s may result in a buckled steel sheet due to thermal stress, and uniformity may not be maintained due to a local high-temperature portion formed in the sheet width direction. Thus, the heating rate is preferably 300°C/s or less, more preferably 150°C/s or less.

Rapid heating to temperature equal to or higher than annealing temperature + 10°C in rapid heating step (rapid heating step final temperature)

When the final temperature in the rapid heating step (rapid heating step final temperature) is lower than the annealing temperature + 10°C, austenite cannot be sufficiently formed by rapid heating, and a microstructure with a desired total area fraction of bainitic ferrite and tempered martensite or a microstructure in which the area fraction of bainitic ferrite is 40% or more of the total area fraction of bainitic ferrite and tempered martensite cannot be formed. Thus, the effect of improving at least one of YS, TS, ductility, and bendability by rapid heating cannot be obtained, and desired mechanical properties cannot be ensured in some cases. The final temperature in the rapid heating step (the rapid heating step final temperature) is preferably the annealing temperature + 30°C or more, more preferably the annealing temperature + 50°C or more.

The upper limit of the rapid heating step final temperature is preferably, but not limited to, the annealing temperature + 210°C or less, more preferably the annealing temperature + 150°C or less, even more preferably the annealing temperature + 120°C or less, from the perspective of production efficiency.

An induction heating (IH) apparatus in the rapid heating step rapidly heats the steel sheet by adjusting the output so that the temperature of the steel sheet is included in the annealing temperature + 10°C or more (preferably 740°C or more and 940°C or less). Furthermore, in the case of heating in such a temperature range, the induction heating (IH) apparatus is desirably a transverse type. The appropriate rapid heating final temperature varies with the chemical composition of the steel sheet. Thus, it is preferable that a suitable temperature range is predicted in advance by measurement, calculation, or simulation, and is set in consideration of the temperature of the steel sheet in the annealing step.

The final temperature in the rapid heating step can be measured with a thermometer that measures the surface temperature of the steel sheet. The method of temperature measurement is suitably, for example, but not limited to, a radiation thermometer that measures the temperature by sensing infrared radiation emitted by the steel sheet. When a radiation thermometer is used, a cover may be provided between a measurement unit of the radiation thermometer and a detection portion of the steel sheet because the radiation thermometer may be affected by reflected light of infrared radiation emitted from a surrounding furnace body. Furthermore, since there is an influence of the emissivity of the surface of the steel sheet, a multiple reflection type measurement method utilizing a wedge-shaped space between a furnace feed roller and the steel sheet may be adopted. Furthermore, it is desirable to use a scanning radiation thermometer for temperature measurement at each position in the width direction of the steel sheet.

(First Cooling Step)

Next, in the first cooling step, the steel sheet after being annealed as described above (after the rapid heating step) is cooled to a temperature of 400°C or more and 600°C or less (a first cooling stop temperature).

First cooling stop temperature: 400°C or more and 600°C or less

A first cooling stop temperature of less than 400°C results in promoted formation of bainitic ferrite and an area fraction of retained austenite formed together with bainitic ferrite exceeding a predetermined amount, so that the desired local elongation cannot be achieved.

On the other hand, a first cooling stop temperature of more than 600°C results in an excessive increase in the area fraction of ferrite and pearlite, a total area fraction of bainitic ferrite and tempered martensite below 20.0%, and a decrease in TS. Thus, the first cooling stop temperature in the first cooling step is 400°C or more and 600°C or less. The first cooling stop temperature is preferably 460°C or more. The first cooling stop temperature is preferably 550°C or less.

(Holding Step)

After the first cooling step, in the holding step, the steel sheet is held in the temperature range of 400°C or more and 600°C or less (hereinafter also referred to as a holding temperature range) for less than 300 seconds.

Holding time in holding temperature range: less than 300 seconds

In the holding step, bainitic ferrite is formed, and C diffuses from the formed bainitic ferrite to non-transformed austenite adjacent to the bainitic ferrite. This ensures a predetermined area fraction of retained austenite.

Here, when the holding time in the holding temperature range is 300 seconds or more, C and Mn may diffuse excessively from the bainitic ferrite to the non-transformed austenite, and a coarse hard second phase (retained austenite and fresh martensite) may be formed in the bainitic ferrite, so that desired bendability or local elongation may not be achieved. Furthermore, due to excessive formation of bainitic ferrite, the total area fraction of bainitic ferrite and tempered martensite may become excessive, and the local elongation may be decreased. Thus, the holding time in the holding temperature range is preferably less than 300 seconds. The holding time in the holding temperature range is more preferably less than 80 seconds, even more preferably less than 60 seconds. The holding time in the holding temperature range does not include the residence time in the temperature range after the galvanizing treatment in a hot-dip galvanizing step.

(Galvanizing Step (Hot-Dip Galvanizing Step, Alloying Treatment Step))

To produce a hot-dip galvanized steel sheet or a hot-dip galvannealed steel sheet, after the holding step and before the second cooling step, the steel sheet is subjected to a galvanizing treatment (a hot-dip galvanizing treatment or further a hot-dip galvannealing treatment). A galvanized steel sheet can be produced by the galvanizing treatment. The galvanizing treatment may be a hot-dip galvanizing treatment or a galvannealing treatment (a hot-dip galvanizing treatment and an alloying treatment).

A steel sheet can be subjected to the hot-dip galvanizing treatment to produce a hot-dip galvanized steel sheet and can further be subjected to the alloying treatment to produce a hot-dip galvannealed steel sheet. The hot-dip galvanizing treatment and the alloying treatment are hereinafter also collectively referred to as a hot-dip galvannealing treatment.

In the hot-dip galvanizing treatment, preferably, the steel sheet is immersed in a hot-dip galvanizing bath at 440°C or more and 500°C or less, and the coating weight is then adjusted by gas wiping or the like. The hot-dip galvanizing bath is not particularly limited as long as the galvanized layer has the composition described above, and is preferably, for example, a galvanizing bath having a composition with an Al content of 0.10% by mass or more and with the remainder being Zn and incidental impurities. The Al content is preferably 0.23% by mass or less.

In the hot-dip galvannealing treatment, after the hot-dip galvanizing treatment performed in the manner described above, the galvanized steel sheet is preferably heated to an alloying temperature of 450°C or more to perform an alloying treatment. The alloying temperature is preferably 600°C or less.

An alloying temperature of less than 450°C may result in a low Zn-Fe alloying speed and make alloying difficult. On the other hand, an alloying temperature of more than 600°C results in transformation of non-transformed austenite into pearlite, makes it difficult to achieve a TS of 780 MPa or more, and results in a decrease in ductility. The alloying temperature is more preferably 470°C or more. The alloying temperature is more preferably 570°C or less.

The coating weight of each of the hot-dip galvanized steel sheet (GI) and the hot-dip galvannealed steel sheet (GA) is preferably 20 g/m$^2$ or more per side. The coating weight per side of the galvanized layer is preferably 80 g/m$^2$ or less. The coating weight can be adjusted by gas wiping or the like.

(Second Cooling Step)

Next, after the galvanizing step in the case of producing a hot-dip galvanized steel sheet or a hot-dip galvannealed steel sheet or after the holding step in the case of producing a steel sheet or an electrogalvanized steel sheet, the steel sheet is cooled to a second cooling stop temperature of 100°C or more and 300°C or less.

Second cooling stop temperature: 100°C or more and 300°C or less

The second cooling step is a subsequent step necessary to control the area fraction of tempered martensite and the area fraction of retained austenite formed in the subsequent reheating and holding step within predetermined ranges. At a second cooling stop temperature of less than 100°C, almost all the non-transformed austenite present in the steel is transformed into martensite in the second cooling step. Finally, the area fraction of tempered martensite increases excessively, and the area fraction of bainitic ferrite cannot be 40% or more of the total area fraction of bainitic ferrite and tempered martensite, resulting in a decrease in El.

On the other hand, a second cooling stop temperature of more than 300°C results in a decrease in the area fraction of tempered martensite and an increase in the area fraction of fresh martensite. Consequently, a desired bendability cannot be achieved. Thus, the second cooling stop temperature is 100°C or more and 300°C or less. The second cooling stop temperature is preferably 120°C or more. The second cooling stop temperature is preferably 280°C or less.

(Reheating and Holding Step)

The steel sheet is then reheated to a tempering temperature of 460°C or less (hereinafter also referred to as a reheating temperature range) and is held at a tempering temperature of 460°C or less for a tempering time of 10 seconds or more and 2000 seconds or less.

This tempers martensite present in the steel at the end of the second cooling step. Furthermore, austenite stable at room temperature, that is, retained austenite, is formed by diffusing supersaturated C dissolved in martensite into non-transformed austenite.

Tempering temperature (reheating temperature): 460°C or less

Although the lower limit of the tempering temperature (reheating temperature) is not particularly limited, at 300°C or less, tempering of martensite present in the steel at the end of the second cooling step may not proceed sufficiently, fresh martensite may increase excessively, coarsening of carbide in tempered martensite may not proceed sufficiently, the density of carbide in tempered martensite may increase, and consequently bendability or local elongation may decrease. Thus, the tempering temperature is preferably more than 300°C. The tempering temperature is preferably 340°C or more, more preferably 360°C or more.

On the other hand, a tempering temperature (reheating temperature) of more than 460°C results in excessive tempering of martensite present in the steel at the end of the second cooling step and makes it difficult to achieve a TS of 780 MPa or more. This also results in a decrease in ductility because non-transformed austenite present in the steel at the end of the second cooling step is decomposed as carbide (pearlite). Thus, the tempering temperature (reheating temperature) is 460°C or less. The tempering temperature is the highest temperature reached in the reheating and holding step. The tempering temperature is preferably 440°C or less, more preferably 420°C or less.

Tempering time (holding time) in reheating temperature range: 10 seconds or more and 2000 seconds or less

A tempering time (holding time) of less than 10 seconds in the reheating temperature range results in insufficient tempering of martensite present in the steel at the end of the second cooling step and an excessive increase in fresh martensite. This may also result in insufficient coarsening of carbide in tempered martensite and an excessive density of carbide in the tempered martensite. Consequently, a desired bendability and a desired local elongation cannot be achieved.

On the other hand, a tempering time (holding time) of more than 2000 seconds in the reheating temperature range results in excessive tempering of martensite present in the steel at the end of the second cooling step and makes it difficult to achieve a TS of 780 MPa or more. This may also results in a decrease in ductility because non-transformed austenite present in the steel at the end of the second cooling step is decomposed as carbide (pearlite).

Thus, the tempering time (holding time) in the reheating temperature range is 10 seconds or more and 2000 seconds or less. The tempering time is preferably 20 seconds or more, more preferably 30 seconds or more. The tempering time is preferably 1000 seconds or less, more preferably 500 seconds or less, even more preferably 100 seconds or less.

The tempering time (holding time) in the reheating temperature range includes, in addition to the holding time at the reheating temperature, the residence time in the temperature range in heating and cooling before and after reaching the reheating temperature.

The cooling conditions after holding in the reheating temperature range are not particularly limited and may be based on a usual method. The cooling method is, for example, gas jet cooling, mist cooling, roll cooling, water cooling, natural cooling, or the like. From the perspective of preventing surface oxidation, after holding in the reheating temperature range, cooling to 50°C or less is preferred, and cooling to approximately room temperature is more preferred. The average cooling rate in cooling after holding in the reheating temperature range is preferably, for example, 1°C/s or more and 50°C/s or less.

(Galvanizing Step (Electrogalvanizing Step))

After cooling to room temperature, an electrogalvanizing treatment may be performed. A steel sheet can be subjected to an electrogalvanizing treatment to produce an electrogalvanized steel sheet. When the surface of the steel sheet is subjected to electrogalvanizing, the treatment conditions of the electrogalvanizing treatment are not particularly limited and may be based on a usual method.

Furthermore, the steel sheet thus produced may be further subjected to temper rolling. A rolling reduction of more than 2.00% in the temper rolling may result in an increase in yield stress and a decrease in dimensional accuracy when the steel sheet is formed into a member. Thus, the rolling reduction of the temper rolling is preferably 2.00% or less. The lower limit of the rolling reduction in the temper rolling is preferably, but not limited to, 0.05% or more from the perspective of productivity. The temper rolling may be performed with an apparatus coupled to an annealing apparatus for each step (on-line) or with an apparatus separated from the annealing apparatus for each step (off-line). The number of times of temper rolling may be one or two or more. Provided that the elongation percentage can be similar to that of temper rolling, rolling with a leveler or the like may be used.

Conditions other than those described above are not particularly limited and may be based on a usual method.

[3. Member]

Next, a member according to an embodiment of the present invention will be described.

A member according to an embodiment of the present invention is a member produced by using the steel sheet described above (as a material). For example, the steel sheet as a material is subjected to at least one of forming or joining to produce a member.

The steel sheet has a TS of 780 MPa or more and also has a high YS, a high total elongation, a high local elongation, a high bendability, and good energy absorption characteristics. Thus, a member according to an embodiment of the present invention has high strength and good anti-crash properties. Thus, a member according to an embodiment of the present invention is particularly suitable for application to an impact energy absorbing member used in the automotive field.

[4. Method for Producing Member]

Next, a method for producing a member according to an embodiment of the present invention will be described.

A method for producing a member according to an embodiment of the present invention includes a step of subjecting the steel sheet (for example, a steel sheet produced by the method for producing a steel sheet) to at least one of forming or joining to produce a member.

The forming method may be, but is not limited to, for example, a typical processing method, such as press forming. Furthermore, the joining method may be, but is not limited to, for example, typical welding, such as spot welding, laser welding, or arc welding, riveting, caulking, or the like. The forming conditions and the joining conditions are not particularly limited and may be based on a usual method.

EXAMPLES

A steel material with a chemical composition shown in Table 1 (the remainder was composed of Fe and incidental impurities) was melted in a converter and was formed into a steel slab by a continuous casting method. In Table 1, "-" indicates the incidental impurity level content.

The steel slab was heated to 1200°C and, after the heating, was subjected to hot rolling composed of rough rolling and finish rolling at a finish rolling temperature of 900°C to form a hot-rolled steel sheet. Hot-rolled steel sheets No. 1, Nos. 4 to 24, Nos. 27 to 49, Nos. 51 to 58, Nos. 61 to 75, Nos. 77 to 84, and Nos. 87 to 98 thus produced were then subjected to pickling and cold rolling (rolling reduction: 50%) to produce cold-rolled steel sheets with the thicknesses shown in Table 2. Hot-rolled steel sheets Nos. 2 and 3, Nos. 25 and 26, No. 50, Nos. 59 and 60, No. 76, and Nos. 85 and 86 thus produced were subjected to pickling to produce hot-rolled steel sheets (pickled) with the thicknesses shown in Table 2.

The cold-rolled steel sheets or hot-rolled steel sheets (pickled) were subjected to treatments in an annealing step, a rapid heating step, a first cooling step, a holding step, a galvanizing step, a second cooling step, and a reheating and holding step under the conditions shown in Table 2, thereby producing steel sheets. Cold-rolled steel sheets were produced by performing the treatments excluding the galvanizing step. Electrogalvanized steel sheets were produced by performing a treatment in an electrogalvanizing step after the treatments excluding the holding step and the galvanizing step, more specifically, after the reheating and holding step.

In the galvanizing step, a hot-dip galvanizing treatment, a galvannealing treatment, or an electrogalvanizing treatment was performed to produce a hot-dip galvanized steel sheet (hereinafter also referred to as GI), a hot-dip galvannealed steel sheet (hereinafter also referred to as GA), or an electrogalvanized steel sheet (hereinafter also referred to as EG). In Table 2, the types of galvanizing steps are also indicated as "GI", "GA", and "EG". In the GI and EG steel sheets in Table 2, no alloying treatment is performed, and the alloying temperature is indicated by "-". In Table 2, a cold-rolled steel sheet produced without the galvanizing treatment in the galvanizing step is indicated as "CR".

The galvanizing bath temperature was 470°C in the production of GI and GA.

The galvanized coating weight ranged from 10 to 70 $g/m^2$ when EG was produced. The galvanized coating weight ranged from 45 to 72 $g/m^2$ per side to produce GI and was 45 $g/m^2$ per side to produce GA.

The composition of the galvanized layer of the final galvanized steel sheet in GI contained Fe: 0.1% to 1.0% by mass and Al: 0.2% to 0.33% by mass, and the remainder was composed of Zn and incidental impurities. GA contained Fe: 8.0% to 12.0% by mass and Al: 0.1% to 0.23% by mass, and the remainder was composed of Zn and incidental impurities. EG contained Ni: 9.0% to 25.0% by mass, and the remainder was composed of Zn and incidental impurities.

In each case, the galvanized layer was formed on both surfaces of the base steel sheet.

In the steel sheets thus produced, the steel microstructure of the base steel sheet was identified in the above-described manner. Table 2 shows the measurement results. In Table 3, F represents ferrite, BF represents bainitic ferrite, TM represents tempered martensite, RA represents retained austenite, FM represents fresh martensite, and P represents pearlite.

In accordance with the above-described procedure, the surface layer in which the total area fraction of the non-ferrite microstructure was 1/2 or less of that at the quarter thickness position was defined as the surface soft layer.

The tensile strength (TS), the yield stress (YS), the total elongation (T-El), the local elongation (L-El), the critical bending angle ($\alpha$) in a VDA bending test, the bending deformation absorbed energy amount, and the production efficiency (E) were evaluated according to the following criteria.

- TS

    O (acceptable): 780 MPa or more and less than 1180 MPa
    X (fail): less than 780 MPa or 1180 MPa or more

- YS

    O (acceptable):

        (A) For 780 MPa $\leq$ TS < 980 MPa, 400 MPa $\leq$ YS $\leq$ 650 MPa
        (B) For 980 MPa $\leq$ TS < 1180 MPa, 600 MPa $\leq$ YS $\leq$ 900 MPa

    X (fail):

        (A) For 780 MPa $\leq$ TS < 980 MPa, 400 MPa > YS, or 650 MPa < YS
        (B) For 980 MPa $\leq$ TS < 1180 MPa, 600 MPa > YS, or 900 MPa < YS

- T-El

  O (acceptable):

  (A) For 780 MPa ≤ TS < 980 MPa, 17.0% ≤ T-El
  (B) For 980 MPa ≤ TS < 1180 MPa, 11.0% ≤ T-El

  X (fail):

  (A) For 780 MPa ≤ TS < 980 MPa, 17.0% > T-El
  (B) For 980 MPa ≤ TS < 1180 MPa, 11.0% > T-El

- L-El

  O (acceptable):

  (A) For 780 MPa ≤ TS < 980 MPa, 7.0% ≤ L-El
  (B) For 980 MPa ≤ TS < 1180 MPa, 5.0% ≤ L-El

  X (fail):

  (A) For 780 MPa ≤ TS < 980 MPa, 7.0% > L-El
  (B) For 980 MPa ≤ TS < 1180 MPa, 5.0% > L-Ll

- Critical bending angle ($\alpha$) in VDA bending test

  O (acceptable): 80 degrees or more
  X (fail): less than 80 degrees

- Integral value AE of load F from start of deformation to load maximum value in load-stroke curve in VDA bending test

  O (acceptable): 55000N·mm or more
  X (fail): less than 55000N·mm

- Production efficiency E (ton/h) = LS x t x W x $\rho$ x 60 x 10-6

  Acceptable (A): 16.0 < E < 190.0
  Acceptable (B): 3.0 < E ≤ 16.0, or 190.0 ≤ E < 390.0
  Acceptable (C): 3.0 ≥ E or E ≥ 390.0
  wherein
  LS: line speed (m/min) in annealing step
  t: sheet thickness (mm) after pickling step and before annealing step
  W: sheet width (mm) after pickling step and before annealing step
  $\rho$: specific gravity of iron (ton/m$^3$), $\rho$ = 7.86 (ton/m$^3$).

(1) Tensile Test

The tensile test was performed in accordance with JIS Z 2241 (2011). More specifically, a JIS No. 5 specimen was taken from a steel sheet thus produced such that the longitudinal direction was perpendicular to the rolling direction of the base steel sheet. A tensile test was performed on the test specimen at a crosshead speed of 10 mm/min to measure TS, YS, T-El, and L-El. Table 3 shows the results.

(2) VDA Bending Test

The VDA bending test was performed in a bending test according to the VDA standard (VDA 238-100) defined by the German Association of the Automotive Industry.
More specifically, a 70 mm x 60 mm test specimen was taken by shearing from a steel sheet thus produced. A 60-mm side is parallel to the rolling (L) direction.

One surface of the test specimen was ground or the like to achieve a uniform thickness of 1.2 mm, and the test specimen with the ground surface on the inner side of bending was subjected to the VDA bending test under the following conditions.

A steel sheet with a thickness of less than 1.2 mm was subjected to the test without grinding or the like.

Test method: roll support, punch pressing
Roll diameter: φ30 mm
Punch tip R: 0.4 mm
Distance between rolls: (sheet thickness x 2) + 0.5 mm
Stroke speed: 20 mm/min
Bending direction: a (C) direction perpendicular to the rolling direction

When the load F applied with a press bending jig from above reaches the maximum, the angle on the outside of a bend at the central portion of a plate-like test specimen is measured as a bending angle (critical bending angle) (degree). Furthermore, a load-stroke curve thus obtained is used to calculate an integral value (absorbed energy) of the load-stroke curve up to the maximum load. The VDA bending test is performed three times, and the critical bending angle at the maximum load and the average value of the integral value (absorbed energy) of the load-stroke curve are defined as $\alpha$ (degree) and AE, respectively. Table 3 shows the results.

The VDA bending test of a steel sheet with a thickness of more than 1.2 mm was all performed on a steel sheet with a thickness of 1.2 mm in consideration of the influence of the sheet thickness. A steel sheet with a thickness of more than 1.2 mm was ground on one side to have a thickness of 1.2 mm. Since the bendability of the surface of the steel sheet may be affected by grinding, the ground surface was on the inside of the bend (the side in contact with the punch) in the VDA bending test.

On the other hand, in the VDA bending test of a steel sheet with a thickness of less than 1.2 mm, the sheet thickness has a small influence, and the test was performed without the grinding treatment.

[Table 1]

| Steel grade | Chemical composition (% by mass) | | | | | | | | Notes |
|---|---|---|---|---|---|---|---|---|---|
| | C | Si | Mn | P | S | sol. Al | N | Others | |
| A | 0.12 | 1.85 | 1.21 | 0.061 | 0.0109 | 0.076 | 0.0010 | V: 0.042, Ta: 0.006 | Conforming steel |
| B | 0.20 | 0.68 | 2.18 | 0.012 | 0.0172 | 0.016 | 0.0007 | Mo: 0.070, Cs: 0.0141 | Conforming steel |
| C | 0.24 | 1.91 | 2.15 | 0.036 | 0.0093 | 0.059 | 0.0005 | B: 0.0008, Sb: 0.008, Cs: 0.0009 | Conforming steel |
| D | 0.09 | 1.49 | 2.73 | 0.060 | 0.0113 | 0.065 | 0.0026 | Nb: 0.052, Ni: 0.386, Mg: 0.0014 | Conforming steel |
| E | 0.26 | 0.63 | 2.47 | 0.002 | 0.0142 | 0.010 | 0.0045 | Ti: 0.022, Sn: 0.008, Ta: 0.071 | Conforming steel |
| F | 0.16 | 1.99 | 1.61 | 0.086 | 0.0066 | 0.046 | 0.0033 | Cr: 0.060, W: 0.042 | Conforming steel |
| G | 0.08 | 0.75 | 2.58 | 0.058 | 0.0067 | 0.033 | 0.0098 | B: 0.0049, Zr: 0.0017, Sr: 0.0009 | Conforming steel |
| H | 0.11 | 1.19 | 2.67 | 0.066 | 0.0103 | 0.019 | 0.0026 | Ti: 0.031, Ni: 0.062, W: 0.252 | Conforming steel |
| I | 0.16 | 1.32 | 1.06 | 0.024 | 0.0153 | 0.095 | 0.0050 | Sb: 0.019, Co: 0.0036, As: 0.0260 | Conforming steel |
| J | 0.11 | 1.91 | 1.87 | 0.054 | 0.0107 | 0.986 | 0.0029 | Cu: 0.150, Zr: 0.0092, Ge: 0.0008 | Conforming steel |
| K | 0.12 | 1.02 | 2.78 | 0.013 | 0.0041 | 1.951 | 0.0026 | Ti: 0.055, Cr: 0.56, Mg: 0.0133, Ge: 0.0145 | Conforming steel |
| L | 0.06 | 0.46 | 2.14 | 0.094 | 0.0093 | 0.073 | 0.0030 | Nb: 0.006, Ca: 0.0015, REM: 0.0009 | Conforming steel |
| M | 0.29 | 1.61 | 1.61 | 0.086 | 0.0102 | 0.498 | 0.0022 | V: 0.058, Zn: 0.0040, Se: 0.0142 | Conforming steel |
| N | 0.22 | 0.15 | 2.98 | 0.071 | 0.0147 | 0.018 | 0.0047 | Ti: 0.192, Se: 0.0010, REM: 0.0138 | Conforming steel |
| O | 0.29 | 1.74 | 2.93 | 0.074 | 0.0043 | 0.068 | 0.0039 | Ni: 0.280, Cu: 0.030, Te: 0.0009 | Conforming steel |
| P | 0.05 | 0.73 | 2.49 | 0.017 | 0.0068 | 0.021 | 0.0019 | Cr: 0.150, Te: 0.0140, Pb: 0.0138 | Conforming steel |
| Q | 0.18 | 0.54 | 1.91 | 0.061 | 0.0103 | 0.051 | 0.0010 | Mo: 0.170, Zn: 0.0145, As: 0.0016, Bi: 0.0140 | Conforming steel |
| R | 0.24 | 1.62 | 3.47 | 0.006 | 0.0160 | 0.049 | 0.0012 | Ti: 0.006, Co: 0.0141, Sr: 0.0144, Pb: 0.0011 | Conforming steel |
| S | 0.24 | 0.15 | 2.01 | 0.068 | 0.0053 | 0.092 | 0.0021 | - | Conforming steel |
| T | 0.15 | 1.94 | 2.56 | 0.089 | 0.0084 | 0.005 | 0.0028 | Nb: 0.021, V: 0.033, Ni: 0.110, Hf: 0.0139, Bi: 0.0012 | Conforming steel |
| U | 0.05 | 0.10 | 1.73 | 0.035 | 0.0115 | 0.015 | 0.0034 | B: 0.0027, Sb: 0.005, Sn: 0.017, Ca: 0.0170, Hf: 0.0010 | Conforming steel |
| V | 0.30 | 1.31 | 2.24 | 0.068 | 0.0195 | 0.079 | 0.0016 | B: 0.0034 | Conforming steel |
| W | 0.07 | 0.44 | 2.41 | 0.033 | 0.0135 | 0.060 | 0.0035 | Mo: 0.150 | Conforming steel |
| X | 0.18 | 1.91 | 2.10 | 0.004 | 0.0035 | 0.090 | 0.0007 | Zr: 0.0280 | Conforming steel |
| Y | 0.08 | 1.68 | 2.50 | 0.079 | 0.0076 | 0.040 | 0.0008 | Nb: 0.050 | Conforming steel |
| Z | 0.09 | 0.28 | 3.28 | 0.012 | 0.0017 | 0.039 | 0.0028 | Ni: 0.340, Sn: 0.110 | Conforming steel |
| AA | 0.13 | 0.75 | 2.34 | 0.094 | 0.0043 | 0.100 | 0.0037 | W: 0.450 | Conforming steel |
| AB | 0.10 | 0.92 | 3.35 | 0.063 | 0.0156 | 0.007 | 0.0011 | Cu: 0.960 | Conforming steel |
| AC | 0.16 | 0.56 | 2.49 | 0.018 | 0.0122 | 0.078 | 0.0028 | Nb: 0.070, Pb: 0.0130 | Conforming steel |
| AD | 0.12 | 0.45 | 1.89 | 0.067 | 0.0162 | 0.054 | 0.0029 | V: 0.070 | Conforming steel |
| AE | 0.14 | 1.11 | 2.60 | 0.012 | 0.0117 | 0.083 | 0.0030 | Ti: 0.120 | Conforming steel |
| AF | 0.12 | 1.92 | 2.95 | 0.011 | 0.0107 | 0.096 | 0.0033 | Cr: 0.450, Mo: 0.490 | Conforming steel |
| AG | 0.07 | 1.25 | 3.02 | 0.058 | 0.0154 | 0.008 | 0.0016 | - | Conforming steel |
| AH | 0.08 | 0.97 | 3.13 | 0.067 | 0.0002 | 0.019 | 0.0021 | V: 0.120, Ta: 0.060, Sr: 0.0130 | Conforming steel |
| AI | 0.15 | 0.10 | 2.15 | 0.008 | 0.0103 | 0.016 | 0.0027 | - | Conforming steel |
| AJ | 0.25 | 0.20 | 2.23 | 0.003 | 0.0091 | 0.098 | 0.0022 | - | Conforming steel |
| AK | 0.14 | 0.36 | 2.91 | 0.030 | 0.0172 | 0.051 | 0.0044 | Cu: 0.120 | Conforming steel |
| AL | 0.20 | 0.10 | 2.61 | 0.093 | 0.0183 | 0.052 | 0.0041 | - | Conforming steel |
| AM | 0.13 | 1.57 | 2.43 | 0.017 | 0.0063 | 0.090 | 0.0007 | V: 0.040, Cu: 0.090 | Conforming steel |
| AN | 0.07 | 1.69 | 1.67 | 0.064 | 0.0038 | 0.014 | 0.0025 | Nb: 0.120 | Conforming steel |
| AO | 0.04 | 1.52 | 1.15 | 0.096 | 0.0147 | 0.072 | 0.0011 | - | Comparative steel |
| AP | 0.31 | 0.15 | 1.98 | 0.029 | 0.0036 | 0.084 | 0.0036 | - | Comparative steel |
| AQ | 0.23 | 0.00 | 1.88 | 0.043 | 0.0064 | 0.059 | 0.0049 | - | Comparative steel |
| AR | 0.11 | 2.10 | 2.66 | 0.063 | 0.0149 | 0.046 | 0.0048 | - | Comparative steel |
| AS | 0.08 | 1.11 | 0.96 | 0.026 | 0.0140 | 0.070 | 0.0048 | - | Comparative steel |
| AT | 0.12 | 0.29 | 3.59 | 0.018 | 0.0093 | 0.032 | 0.0014 | - | Comparative steel |
| AU | 0.09 | 0.90 | 2.40 | 0.014 | 0.0080 | 0.040 | 0.0030 | Nb: 0.200, Ti: 0.200, V: 0.200, Sb: 0.200, Sn: 0.200, B: 0.0100, Cr: 1.000, Ni: 1.000 Mo: 1.000, Cu: 1.000, Ta: 0.100, Zr: 0.100, W: 0.500, Mg: 0.0200, Zn: 0.0200, Co: 0.0200, Ca: 0.0200, Se: 0.0200, Te: 0.0200, Ge: 0.0200, Sr: 0.0200, Cs: 0.0200, Hf: 0.0200, Pb: 0.0200, Bi: 0.0200, REM: 0.0200, As: 0.0500% | Conforming steel |

- The remainder other than the chemical composition is composed of Fe and incidental impurities.

[Table 2-1]

| No. | Steel grade | Type | Sheet thickness (mm) | Sheet width (mm) | Formula (1) left side (*1) | Line speed LS (m/min) | Formula (1) right side (*1) | Annealing temperature (°C) | Holding time (s) | Dew-point temperature (°C) | Heating rate (°C/s) | Final temperature (°C) | Final temperature - annealing temperature (°C) | First cooling stop temperature (°C) | Holding time (s) | Hot-dip galvanizing step Yes/No | Alloying step Yes/No | Second cooling stop temperature (°C) | Tempering temperature (°C) | Tempering time (s) | Electrogalvanizing step Yes/No | Production efficiency E (ton/h) | Rating of production efficiency (*2) | Type (*2) | Notes |
|---|---|---|---|---|---|---|---|---|---|---|---|---|---|---|---|---|---|---|---|---|---|---|---|---|---|
| 1 | A | Cold-rolled sheet | 1.2 | 730 | 7.3 | 70.6 | 944.0 | 770 | 170 | 6 | 112 | 860 | 90 | 570 | 50 | Yes | Yes | 280 | 250 | 100 | No | 29.2 | A | GA | Inventive example |
| 2 | B | Hot-rolled sheet | 3.5 | 1590 | 1.1 | 57.1 | 148.6 | 810 | 210 | -4 | 300 | 930 | 120 | 590 | 70 | Yes | Yes | 180 | 270 | 10 | No | 150.0 | A | GA | Inventive example |
| 3 | C | Hot-rolled sheet | 2.9 | 1370 | 1.6 | 30.0 | 208.1 | 810 | 400 | 10 | 103 | 890 | 80 | 520 | 20 | Yes | Yes | 170 | 350 | 60 | No | 56.2 | A | GA | Inventive example |
| 4 | D | Cold-rolled sheet | 1.4 | 1050 | 4.3 | 85.7 | 562.6 | 850 | 140 | 12 | 51 | 880 | 30 | 500 | 40 | Yes | Yes | 210 | 350 | 50 | No | 59.4 | A | GA | Inventive example |
| 5 | E | Cold-rolled sheet | 1.6 | 1260 | 3.1 | 13.3 | 403.8 | 720 | 900 | 5 | 150 | 920 | 200 | 440 | 200 | Yes | Yes | 160 | 250 | 80 | No | 12.9 | B | GA | Inventive example |
| 6 | F | Cold-rolled sheet | 0.7 | 1520 | 8.0 | 400.0 | 777.2 | 780 | 30 | 6 | 77 | 840 | 60 | 490 | 10 | Yes | Yes | 120 | 340 | 1000 | No | 200.7 | B | GA | Inventive example |
| 7 | G | Cold-rolled sheet | 0.8 | 1060 | 7.5 | 38.7 | 975.2 | 860 | 310 | -7 | 71 | 930 | 70 | 600 | 90 | Yes | Yes | 220 | 380 | 2000 | No | 15.5 | B | GA | Inventive example |
| 8 | H | Cold-rolled sheet | 1.6 | 1010 | 3.9 | 100.0 | 511.7 | 840 | 120 | 7 | 83 | 870 | 30 | 480 | 50 | Yes | Yes | 190 | 370 | 70 | No | 76.2 | A | GA | Inventive example |
| 9 | I | Cold-rolled sheet | 2.0 | 1270 | 2.5 | 75.0 | 325.6 | 770 | 160 | -5 | 107 | 920 | 150 | 530 | 250 | Yes | Yes | 110 | 380 | 30 | No | 89.8 | A | GA | Inventive example |
| 10 | J | Cold-rolled sheet | 1.8 | 580 | 6.1 | 32.4 | 792.1 | 730 | 370 | 16 | 55 | 920 | 190 | 580 | 40 | Yes | Yes | 180 | 410 | 500 | No | 16.0 | B | GA | Inventive example |
| 11 | K | Cold-rolled sheet | 1.2 | 960 | 5.5 | 120.0 | 717.9 | 830 | 100 | 1 | 71 | 870 | 40 | 470 | 60 | Yes | Yes | 160 | 390 | 60 | No | 65.2 | A | GA | Inventive example |
| 12 | L | Cold-rolled sheet | 1.3 | 1040 | 4.7 | 15.0 | 611.7 | 730 | 800 | 5 | 67 | 940 | 210 | 560 | 130 | Yes | Yes | 300 | 400 | 70 | No | 9.6 | B | GA | Inventive example |
| 13 | M | Cold-rolled sheet | 1.5 | 1110 | 3.8 | 66.7 | 496.7 | 810 | 180 | 30 | 75 | 920 | 110 | 400 | 80 | Yes | No | 210 | 460 | 80 | No | 52.3 | A | GI | Inventive example |
| 14 | N | Cold-rolled sheet | 1.0 | 1490 | 4.3 | 44.4 | 555.0 | 840 | 270 | -8 | 148 | 850 | 10 | 590 | 100 | Yes | No | 150 | 300 | 90 | No | 31.2 | A | GI | Inventive example |
| 15 | O | Cold-rolled sheet | 1.4 | 1530 | 3.0 | 80.0 | 386.1 | 820 | 150 | -8 | 114 | 870 | 50 | 530 | 40 | Yes | No | 260 | 300 | 50 | No | 80.8 | A | GI | Inventive example |
| 16 | P | Cold-rolled sheet | 2.3 | 830 | 3.3 | 240.0 | 433.2 | 720 | 50 | 22 | 30 | 870 | 150 | 550 | 290 | Yes | No | 140 | 270 | 150 | No | 216.1 | B | GI | Inventive example |
| 17 | P | Cold-rolled sheet | 0.6 | 650 | 16.3 | 14.0 | 2120.4 | 720 | 50 | 22 | 30 | 870 | 150 | 550 | 290 | Yes | No | 140 | 270 | 150 | No | 2.6 | C | GI | Inventive example |
| 18 | Q | Cold-rolled sheet | 0.6 | 750 | 14.1 | 30.0 | 1837.7 | 720 | 400 | 0 | 132 | 840 | 120 | 580 | 130 | Yes | No | 160 | 420 | 90 | No | 6.4 | B | GI | Inventive example |
| 19 | R | Cold-rolled sheet | 1.2 | 790 | 6.7 | 120.0 | 872.3 | 750 | 100 | -10 | 40 | 780 | 30 | 470 | 30 | Yes | No | 100 | 250 | 130 | No | 53.6 | A | GI | Inventive example |
| 20 | S | Cold-rolled sheet | 1.6 | 1530 | 2.6 | 38.7 | 337.8 | 800 | 310 | 15 | 10 | 870 | 70 | 420 | 50 | Yes | No | 250 | 280 | 190 | No | 44.7 | A | GI | Inventive example |
| 21 | T | Cold-rolled sheet | 1.4 | 990 | 4.6 | 600.0 | 596.7 | 730 | 20 | -10 | 102 | 940 | 210 | 580 | 60 | Yes | No | 120 | 360 | 80 | No | 392.2 | C | GI | Inventive example |
| 22 | U | Cold-rolled sheet | 0.8 | 760 | 10.5 | 31.6 | 1360.2 | 860 | 380 | 5 | 44 | 930 | 70 | 460 | 80 | Yes | No | 240 | 440 | 20 | No | 9.1 | B | GI | Inventive example |
| 23 | AU | Cold-rolled sheet | 1.4 | 840 | 5.4 | 60.0 | 703.2 | 830 | 280 | 10 | 50 | 890 | 60 | 440 | 100 | Yes | No | 150 | 400 | 50 | No | 33.3 | A | GA | Inventive example |
| 24 | A | Cold-rolled sheet | 1.2 | 730 | 7.3 | 70.6 | 944.0 | 770 | 170 | 6 | 112 | 860 | 90 | 570 | 50 | No | No | 280 | 250 | 100 | Yes | 29.2 | A | EG | Inventive example |
| 25 | B | Hot-rolled sheet | 3.5 | 1590 | 1.1 | 57.1 | 148.6 | 810 | 210 | -4 | 300 | 930 | 120 | 590 | 70 | No | No | 180 | 270 | 10 | Yes | 150.0 | A | EG | Inventive example |
| 26 | C | Hot-rolled sheet | 2.9 | 1370 | 1.6 | 30.0 | 208.1 | 810 | 400 | 10 | 103 | 890 | 80 | 520 | 20 | No | No | 170 | 350 | 60 | Yes | 56.2 | A | EG | Inventive example |
| 27 | D | Cold-rolled sheet | 1.4 | 1050 | 4.3 | 85.7 | 562.6 | 850 | 140 | 12 | 51 | 880 | 30 | 500 | 40 | No | No | 210 | 350 | 50 | Yes | 59.4 | A | EG | Inventive example |
| 28 | E | Cold-rolled sheet | 1.6 | 1260 | 3.1 | 13.3 | 403.8 | 720 | 900 | 5 | 150 | 920 | 200 | 440 | 200 | No | No | 160 | 250 | 80 | Yes | 12.9 | B | EG | Inventive example |
| 29 | F | Cold-rolled sheet | 0.7 | 1520 | 8.0 | 400.0 | 777.2 | 780 | 30 | 6 | 77 | 840 | 60 | 490 | 10 | No | No | 120 | 340 | 1000 | Yes | 200.7 | B | EG | Inventive example |
| 30 | G | Cold-rolled sheet | 0.8 | 1060 | 7.5 | 38.7 | 975.2 | 860 | 310 | -7 | 71 | 930 | 70 | 600 | 90 | No | No | 220 | 380 | 2000 | Yes | 15.5 | B | EG | Inventive example |
| 31 | H | Cold-rolled sheet | 1.6 | 1010 | 3.9 | 100.0 | 511.7 | 840 | 120 | 7 | 83 | 870 | 30 | 480 | 50 | No | No | 190 | 370 | 70 | Yes | 76.2 | A | EG | Inventive example |
| 32 | I | Cold-rolled sheet | 2.0 | 1270 | 2.5 | 75.0 | 325.6 | 770 | 160 | -5 | 107 | 920 | 150 | 530 | 250 | No | No | 110 | 380 | 30 | Yes | 89.8 | A | EG | Inventive example |
| 33 | J | Cold-rolled sheet | 1.8 | 580 | 6.1 | 32.4 | 792.1 | 730 | 370 | 16 | 55 | 920 | 190 | 580 | 40 | No | No | 180 | 410 | 500 | Yes | 16.0 | B | EG | Inventive example |
| 34 | K | Cold-rolled sheet | 1.2 | 960 | 5.5 | 120.0 | 717.9 | 830 | 100 | 1 | 71 | 870 | 40 | 470 | 60 | No | No | 160 | 390 | 60 | Yes | 65.2 | A | EG | Inventive example |
| 35 | L | Cold-rolled sheet | 1.3 | 1040 | 4.7 | 15.0 | 611.7 | 730 | 800 | 5 | 67 | 940 | 210 | 560 | 130 | No | No | 300 | 400 | 70 | Yes | 9.6 | B | EG | Inventive example |
| 36 | M | Cold-rolled sheet | 1.5 | 1110 | 3.8 | 66.7 | 496.7 | 810 | 180 | 30 | 75 | 920 | 110 | 400 | 80 | No | No | 210 | 460 | 80 | No | 52.3 | A | CR | Inventive example |
| 37 | N | Cold-rolled sheet | 1.0 | 1490 | 4.3 | 44.4 | 555.0 | 840 | 270 | -8 | 148 | 850 | 10 | 590 | 100 | No | No | 150 | 300 | 90 | No | 31.2 | A | CR | Inventive example |
| 38 | O | Cold-rolled sheet | 1.4 | 1530 | 3.0 | 80.0 | 386.1 | 820 | 150 | -8 | 114 | 870 | 50 | 530 | 40 | No | No | 260 | 300 | 50 | No | 80.8 | A | CR | Inventive example |
| 39 | P | Cold-rolled sheet | 2.3 | 830 | 3.3 | 240.0 | 433.2 | 720 | 50 | 22 | 30 | 870 | 150 | 550 | 290 | No | No | 140 | 270 | 150 | No | 216.1 | B | CR | Inventive example |
| 40 | P | Cold-rolled sheet | 0.6 | 650 | 16.3 | 14.0 | 2120.4 | 720 | 50 | 22 | 30 | 870 | 150 | 550 | 290 | No | No | 140 | 270 | 150 | No | 2.6 | C | CR | Inventive example |
| 41 | Q | Cold-rolled sheet | 0.6 | 750 | 14.1 | 30.0 | 1837.7 | 720 | 400 | 0 | 132 | 840 | 120 | 580 | 130 | No | No | 160 | 420 | 90 | No | 6.4 | B | CR | Inventive example |
| 42 | R | Cold-rolled sheet | 1.2 | 790 | 6.7 | 120.0 | 872.3 | 750 | 100 | -10 | 40 | 780 | 30 | 470 | 30 | No | No | 100 | 250 | 130 | No | 53.6 | A | CR | Inventive example |
| 43 | S | Cold-rolled sheet | 1.6 | 1530 | 2.6 | 38.7 | 337.8 | 800 | 310 | 15 | 10 | 870 | 70 | 420 | 50 | No | No | 250 | 280 | 190 | No | 44.7 | A | CR | Inventive example |
| 44 | T | Cold-rolled sheet | 1.4 | 990 | 4.6 | 600.0 | 596.7 | 730 | 20 | -10 | 102 | 940 | 210 | 580 | 60 | No | No | 120 | 360 | 80 | No | 392.2 | C | CR | Inventive example |
| 45 | U | Cold-rolled sheet | 0.8 | 760 | 10.5 | 31.6 | 1360.2 | 860 | 380 | 5 | 44 | 930 | 70 | 460 | 80 | No | No | 240 | 440 | 20 | No | 9.1 | B | CR | Inventive example |
| 46 | AU | Cold-rolled sheet | 1.4 | 840 | 5.4 | 60.0 | 703.2 | 830 | 280 | 10 | 50 | 890 | 60 | 440 | 100 | No | No | 150 | 400 | 50 | No | 33.3 | A | CR | Inventive example |

*1) Formula (1): 3.0/(t x W x 4.716 x 10⁴) < LS < 390.0/(t x W x 4.716 x 10⁴) (t: sheet thickness (mm), W: sheet width (mm))
*2) CR: without coating (cold-rolled steel sheet), EG: electrogalvanizing, GI: hot-dip galvanizing, GA: hot-dip galvannealed
*3) E (ton/h) = LS x t x W x ρ x 60 x 10⁻⁶ (t: sheet thickness (mm), W: sheet width (mm), ρ = 7.86 (ton/m³)

[Table 2-2]

| No. | Steel grade | Type | Sheet thickness (mm) | Sheet width (mm) | Formula (1) left side (*1) | Line speed LS (m/min) | Formula (1) right side (*1) | Annealing temperature (°C) | Holding time (s) | Dew-point temperature (°C) | Heating rate (°C/s) | Final temperature (°C) | Final temperature - annealing temperature (°C) | First cooling stop temperature (°C) | Holding time (s) | Hot-dip galvanizing step (Yes/No) | Alloying step (Yes/No) | Second cooling stop temperature (°C) | Tempering temperature (°C) | Tempering time (s) | Electrogalvanizing step (Yes/No) | Production efficiency E (*3) (ton/h) | Rating of production efficiency | Type (*2) | Notes |
|---|---|---|---|---|---|---|---|---|---|---|---|---|---|---|---|---|---|---|---|---|---|---|---|---|---|
| 47 | V | Cold-rolled sheet | 0.6 | 740 | 14.3 | 14.0 | 1862.5 | 710 | 860 | -10 | 115 | 800 | 90 | 420 | 30 | Yes | Yes | 100 | 440 | 140 | No | 2.9 | C | GA | Comparative example |
| 48 | W | Cold-rolled sheet | 1.5 | 990 | 4.3 | 37.5 | 556.9 | 710 | 320 | -10 | 115 | 800 | 90 | 490 | 220 | Yes | Yes | 130 | 340 | 70 | No | 26.3 | A | GA | Comparative example |
| 49 | X | Cold-rolled sheet | 0.6 | 740 | 14.3 | 14.0 | 1862.5 | 870 | 860 | -10 | 144 | 880 | 10 | 400 | 90 | Yes | Yes | 160 | 400 | 40 | No | 2.9 | C | GA | Comparative example |
| 50 | Y | Hot-rolled sheet | 3.5 | 650 | 2.8 | 35.3 | 363.5 | 870 | 340 | 5 | 149 | 890 | 20 | 480 | 40 | Yes | Yes | 290 | 380 | 400 | No | 37.9 | A | GA | Comparative example |
| 51 | Z | Cold-rolled sheet | 1.2 | 750 | 7.1 | 800.0 | 918.9 | 760 | 15 | 10 | 145 | 860 | 100 | 510 | 140 | Yes | Yes | 220 | 450 | 110 | No | 339.6 | B | GA | Comparative example |
| 52 | AA | Cold-rolled sheet | 1.2 | 1570 | 3.4 | 300.0 | 438.9 | 820 | 40 | -11 | 121 | 830 | 10 | 510 | 160 | Yes | Yes | 180 | 260 | 370 | No | 266.5 | B | GA | Comparative example |
| 53 | AB | Cold-rolled sheet | 1.2 | 1060 | 5.0 | 171.4 | 650.1 | 830 | 70 | 5 | 9 | 860 | 30 | 510 | 140 | Yes | Yes | 120 | 260 | 50 | No | 102.8 | A | GA | Comparative example |
| 54 | AC | Cold-rolled sheet | 1.0 | 1040 | 6.1 | 30.0 | 795.2 | 760 | 400 | -1 | 99 | 765 | 5 | 520 | 80 | Yes | Yes | 220 | 330 | 100 | No | 14.7 | B | GA | Comparative example |
| 55 | AD | Cold-rolled sheet | 1.1 | 610 | 9.5 | 40.0 | 1232.4 | 790 | 300 | -4 | 57 | 790 | 0 | 560 | 10 | Yes | Yes | 270 | 300 | 90 | No | 12.7 | B | GA | Comparative example |
| 56 | AE | Cold-rolled sheet | 1.4 | 620 | 7.3 | 100.0 | 952.7 | 860 | 120 | 15 | 20 | 865 | 5 | 540 | 250 | Yes | Yes | 150 | 300 | 200 | No | 40.9 | A | GA | Comparative example |
| 57 | AF | Cold-rolled sheet | 1.2 | 740 | 7.2 | 300.0 | 931.3 | 830 | 40 | 11 | 32 | 900 | 70 | 390 | 70 | Yes | Yes | 290 | 380 | 430 | No | 125.6 | A | GA | Comparative example |
| 58 | AG | Cold-rolled sheet | 1.6 | 1080 | 3.7 | 54.5 | 478.8 | 800 | 220 | 8 | 92 | 860 | 60 | 610 | 50 | Yes | Yes | 120 | 420 | 480 | No | 44.5 | A | GA | Comparative example |
| 59 | AH | Hot-rolled sheet | 3.0 | 1410 | 1.5 | 100.0 | 195.5 | 840 | 120 | -2 | 20 | 880 | 40 | 470 | 310 | Yes | Yes | 100 | 340 | 110 | No | 199.5 | B | GA | Comparative example |
| 60 | AI | Hot-rolled sheet | 2.9 | 700 | 3.1 | 40.0 | 407.4 | 850 | 300 | 6 | 30 | 920 | 70 | 440 | 340 | Yes | Yes | 290 | 450 | 480 | No | 38.3 | A | GA | Comparative example |
| 61 | AJ | Cold-rolled sheet | 1.2 | 1010 | 5.2 | 31.6 | 662.3 | 840 | 380 | 2 | 70 | 890 | 50 | 410 | 310 | Yes | Yes | 250 | 330 | 440 | No | 18.0 | A | GA | Comparative example |
| 62 | AK | Cold-rolled sheet | 2.3 | 680 | 4.1 | 54.5 | 528.8 | 850 | 220 | -7 | 92 | 900 | 50 | 590 | 110 | Yes | No | 90 | 260 | 50 | No | 40.2 | A | GI | Comparative example |
| 63 | AL | Cold-rolled sheet | 1.2 | 1520 | 3.5 | 48.0 | 453.4 | 800 | 250 | -5 | 16 | 870 | 70 | 460 | 210 | Yes | No | 310 | 450 | 350 | No | 41.3 | A | GI | Comparative example |
| 64 | AM | Cold-rolled sheet | 1.3 | 1100 | 4.4 | 85.7 | 578.3 | 840 | 140 | -6 | 129 | 870 | 30 | 500 | 90 | Yes | No | 230 | 320 | 5 | No | 57.8 | A | GI | Comparative example |
| 65 | AN | Cold-rolled sheet | 1.5 | 1000 | 4.2 | 42.9 | 551.3 | 820 | 280 | 4 | 76 | 900 | 80 | 480 | 170 | Yes | No | 150 | 370 | 2050 | No | 30.3 | A | GI | Comparative example |
| 66 | AN | Cold-rolled sheet | 1.5 | 1000 | 4.2 | 42.9 | 551.3 | 820 | 280 | 4 | 76 | 900 | 80 | 480 | 170 | Yes | No | 150 | 470 | 200 | No | 30.3 | A | GI | Comparative example |
| 67 | AO | Cold-rolled sheet | 0.6 | 1280 | 8.3 | 63.2 | 1076.8 | 740 | 190 | -8 | 32 | 820 | 80 | 440 | 30 | Yes | No | 200 | 330 | 270 | No | 22.9 | A | GI | Comparative example |
| 68 | AP | Cold-rolled sheet | 0.7 | 860 | 10.6 | 31.6 | 1373.7 | 770 | 380 | -6 | 68 | 860 | 90 | 540 | 240 | Yes | No | 240 | 390 | 90 | No | 9.0 | B | GI | Comparative example |
| 69 | AQ | Cold-rolled sheet | 1.3 | 1470 | 3.3 | 85.7 | 432.7 | 780 | 140 | -9 | 73 | 880 | 100 | 600 | 130 | Yes | No | 110 | 340 | 320 | No | 77.2 | A | GI | Comparative example |
| 70 | AR | Cold-rolled sheet | 0.9 | 1030 | 6.9 | 100.0 | 892.1 | 790 | 120 | 13 | 126 | 860 | 70 | 580 | 50 | Yes | No | 260 | 350 | 500 | No | 43.7 | A | GI | Comparative example |
| 71 | AS | Cold-rolled sheet | 1.3 | 700 | 7.0 | 600.0 | 908.8 | 770 | 20 | 28 | 63 | 820 | 50 | 410 | 130 | Yes | No | 280 | 410 | 50 | No | 257.5 | B | GI | Comparative example |
| 72 | AT | Cold-rolled sheet | 1.2 | 710 | 7.5 | 120.0 | 970.6 | 800 | 100 | 14 | 113 | 890 | 90 | 530 | 210 | Yes | No | 180 | 430 | 10 | No | 48.2 | A | GI | Comparative example |
| 73 | V | Cold-rolled sheet | 0.6 | 740 | 14.3 | 14.0 | 1862.5 | 710 | 860 | -10 | 115 | 800 | 90 | 420 | 30 | No | No | 100 | 440 | 140 | Yes | 2.9 | C | EG | Comparative example |
| 74 | W | Cold-rolled sheet | 1.5 | 990 | 4.3 | 37.5 | 556.9 | 710 | 320 | -10 | 115 | 800 | 90 | 490 | 220 | No | No | 130 | 340 | 70 | Yes | 26.3 | A | EG | Comparative example |
| 75 | X | Cold-rolled sheet | 0.6 | 740 | 14.3 | 14.0 | 1862.5 | 870 | 860 | -10 | 144 | 880 | 10 | 400 | 90 | No | No | 160 | 400 | 40 | Yes | 2.9 | C | EG | Comparative example |
| 76 | Y | Hot-rolled sheet | 3.5 | 650 | 2.8 | 35.3 | 363.5 | 870 | 340 | 5 | 149 | 890 | 20 | 480 | 40 | No | No | 290 | 380 | 400 | Yes | 37.9 | A | EG | Comparative example |
| 77 | Z | Cold-rolled sheet | 1.2 | 750 | 7.1 | 800.0 | 918.9 | 760 | 15 | 10 | 145 | 860 | 100 | 510 | 140 | No | No | 220 | 450 | 110 | Yes | 339.6 | B | EG | Comparative example |
| 78 | AA | Cold-rolled sheet | 1.2 | 1570 | 3.4 | 300.0 | 438.9 | 820 | 40 | -11 | 121 | 830 | 10 | 510 | 160 | No | No | 180 | 260 | 370 | Yes | 266.5 | B | EG | Comparative example |
| 79 | AB | Cold-rolled sheet | 1.2 | 1060 | 5.0 | 171.4 | 650.1 | 830 | 70 | 5 | 9 | 860 | 30 | 510 | 140 | No | No | 120 | 260 | 50 | Yes | 102.8 | A | EG | Comparative example |
| 80 | AC | Cold-rolled sheet | 1.0 | 1040 | 6.1 | 30.0 | 795.2 | 760 | 400 | -1 | 99 | 765 | 5 | 520 | 80 | No | No | 220 | 330 | 100 | Yes | 14.7 | B | EG | Comparative example |
| 81 | AD | Cold-rolled sheet | 1.1 | 610 | 9.5 | 40.0 | 1232.4 | 790 | 300 | -4 | 57 | 790 | 0 | 560 | 10 | No | No | 270 | 300 | 90 | Yes | 12.7 | B | EG | Comparative example |
| 82 | AE | Cold-rolled sheet | 1.4 | 620 | 7.3 | 100.0 | 952.7 | 860 | 120 | 15 | 20 | 865 | 5 | 540 | 250 | No | No | 150 | 300 | 200 | Yes | 40.9 | A | EG | Comparative example |
| 83 | AF | Cold-rolled sheet | 1.2 | 740 | 7.2 | 300.0 | 931.3 | 830 | 40 | 11 | 32 | 900 | 70 | 390 | 70 | No | No | 290 | 380 | 430 | No | 125.6 | A | EG | Comparative example |
| 84 | AG | Cold-rolled sheet | 1.6 | 1080 | 3.7 | 54.5 | 478.8 | 800 | 220 | 8 | 92 | 860 | 60 | 610 | 50 | No | No | 120 | 420 | 480 | No | 44.5 | A | EG | Comparative example |
| 85 | AH | Hot-rolled sheet | 3.0 | 1410 | 1.5 | 100.0 | 195.5 | 840 | 120 | -2 | 20 | 880 | 40 | 470 | 310 | No | No | 100 | 340 | 110 | No | 199.5 | B | EG | Comparative example |
| 86 | AI | Hot-rolled sheet | 2.9 | 700 | 3.1 | 40.0 | 407.4 | 850 | 300 | 6 | 30 | 920 | 70 | 440 | 340 | No | No | 290 | 450 | 480 | No | 38.3 | A | EG | Comparative example |
| 87 | AJ | Cold-rolled sheet | 1.2 | 1010 | 5.2 | 31.6 | 662.3 | 840 | 380 | 2 | 70 | 890 | 50 | 410 | 310 | No | No | 250 | 330 | 440 | No | 18.0 | A | EG | Comparative example |
| 88 | AK | Cold-rolled sheet | 2.3 | 680 | 4.1 | 54.5 | 528.8 | 850 | 220 | -7 | 92 | 900 | 50 | 590 | 110 | No | No | 90 | 260 | 50 | No | 40.2 | A | CR | Comparative example |
| 89 | AL | Cold-rolled sheet | 1.2 | 1520 | 3.5 | 48.0 | 453.4 | 800 | 250 | -5 | 16 | 870 | 70 | 460 | 210 | No | No | 310 | 450 | 350 | No | 41.3 | A | CR | Comparative example |
| 90 | AM | Cold-rolled sheet | 1.3 | 1100 | 4.4 | 85.7 | 578.3 | 840 | 140 | -6 | 129 | 870 | 30 | 500 | 90 | No | No | 230 | 320 | 5 | No | 57.8 | A | CR | Comparative example |
| 91 | AN | Cold-rolled sheet | 1.5 | 1000 | 4.2 | 42.9 | 551.3 | 820 | 280 | 4 | 76 | 900 | 80 | 480 | 170 | No | No | 150 | 370 | 2050 | No | 30.3 | A | CR | Comparative example |
| 92 | AN | Cold-rolled sheet | 1.5 | 1000 | 4.2 | 42.9 | 551.3 | 820 | 280 | 4 | 76 | 900 | 80 | 480 | 170 | No | No | 150 | 470 | 200 | No | 30.3 | A | CR | Comparative example |
| 93 | AO | Cold-rolled sheet | 0.6 | 1280 | 8.3 | 63.2 | 1076.8 | 740 | 190 | -8 | 32 | 820 | 80 | 440 | 30 | No | No | 200 | 330 | 270 | No | 22.9 | A | CR | Comparative example |
| 94 | AP | Cold-rolled sheet | 0.7 | 860 | 10.6 | 31.6 | 1373.7 | 770 | 380 | -6 | 68 | 860 | 90 | 540 | 240 | No | No | 240 | 390 | 90 | No | 9.0 | B | CR | Comparative example |
| 95 | AQ | Cold-rolled sheet | 1.3 | 1470 | 3.3 | 85.7 | 432.7 | 780 | 140 | -9 | 73 | 880 | 100 | 600 | 130 | No | No | 110 | 340 | 320 | No | 77.2 | A | CR | Comparative example |
| 96 | AR | Cold-rolled sheet | 0.9 | 1030 | 6.9 | 100.0 | 892.1 | 790 | 120 | 13 | 126 | 860 | 70 | 580 | 50 | No | No | 260 | 350 | 500 | No | 43.7 | A | CR | Comparative example |
| 97 | AS | Cold-rolled sheet | 1.3 | 700 | 7.0 | 600.0 | 908.8 | 770 | 20 | 28 | 63 | 820 | 50 | 410 | 130 | No | No | 280 | 410 | 50 | No | 257.5 | B | CR | Comparative example |
| 98 | AT | Cold-rolled sheet | 1.2 | 710 | 7.5 | 120.0 | 970.6 | 800 | 100 | 14 | 113 | 890 | 90 | 530 | 210 | No | No | 180 | 430 | 10 | No | 48.2 | A | CR | Comparative example |

*1) Formula (1): $3.0/(t \times W \times 4.716 \times 10^{-4}) < LS < 390.0/(t \times W \times 4.716 \times 10^{-4})$ (t: sheet thickness (mm), W: sheet width (mm))
*2) CR: without coating (cold-rolled steel sheet), EG: electrogalvanizing, GI: hot-dip galvanizing, GA: hot-dip galvannealed
*3) $E$ (ton/h) = $LS \times t \times W \times \rho \times 60 \times 10^{-6}$ (t: sheet thickness (mm), W: sheet width (mm), $\rho$ = 7.86 (ton/m³))

[Table 3-1]

| Steel sheet No. | Steel grade | Steel microstructure (*1) | | | | | | | | Surface soft layer thickness | Yield strength | Tensile strength | Total elongation | Local elongation | VDA bending test | | Notes |
|---|---|---|---|---|---|---|---|---|---|---|---|---|---|---|---|---|---|
| | | V(F) | V(BF) | V(TM+BF) | V(RA) | V(FM) | V(P) | *1 | *2 | | YS | TS | T-El | L-El | Bendability | Energy absorption characteristics | |
| | | (%) | (%) | (%) | (%) | (%) | (%) | (%) | (μm) | (μm) | (MPa) | (MPa) | (%) | (%) | α (degree) | AE (N·mm) | |
| 1 | A | 39.2 | 17.3 | 27.0 | 13.8 | 20.0 | - | 64 | 2.5 | 68 | 617 | 1045 | 19.1 | 6.4 | 117 | 76601 | Inventive example |
| 2 | B | 25.6 | 23.0 | 45.0 | 13.4 | 16.0 | - | 51 | 0.6 | 60 | 649 | 922 | 19.4 | 7.8 | 114 | 74376 | Inventive example |
| 3 | C | 42.1 | 21.4 | 32.0 | 11.9 | 14.0 | - | 67 | 1.2 | 107 | 627 | 818 | 22.4 | 8.0 | 123 | 84706 | Inventive example |
| 4 | D | 43.0 | 22.0 | 44.0 | 5.0 | 8.0 | - | 50 | 0.8 | 68 | 792 | 1039 | 18.1 | 7.3 | 106 | 76710 | Inventive example |
| 5 | E | 38.6 | 24.2 | 55.0 | 3.4 | 3.0 | - | 44 | 0.7 | 143 | 796 | 1170 | 13.0 | 6.7 | 112 | 89807 | Inventive example |
| 6 | F | 24.7 | 24.9 | 43.0 | 13.3 | 19.0 | - | 58 | 0.1 | 30 | 482 | 794 | 23.9 | 8.1 | 97 | 62525 | Inventive example |
| 7 | G | 21.6 | 34.7 | 62.0 | 7.4 | 9.0 | - | 56 | 0.8 | 65 | 591 | 946 | 18.3 | 8.6 | 115 | 75851 | Inventive example |
| 8 | H | 21.0 | 35.0 | 61.0 | 6.0 | 12.0 | - | 57 | 1.1 | 59 | 776 | 1043 | 15.1 | 6.5 | 103 | 74080 | Inventive example |
| 9 | I | 43.6 | 22.8 | 38.0 | 8.4 | 10.0 | - | 60 | 0.9 | 51 | 640 | 953 | 18.8 | 8.8 | 100 | 71645 | Inventive example |
| 10 | J | 29.5 | 47.3 | 55.0 | 6.5 | 9.0 | - | 86 | 0.5 | 112 | 526 | 882 | 20.3 | 10.1 | 127 | 85552 | Inventive example |
| 11 | K | 20.0 | 51.0 | 70.0 | 5.0 | 5.0 | | 73 | 0.7 | 48 | 765 | 998 | 16.1 | 7.1 | 100 | 70562 | Inventive example |
| 12 | L | 22.0 | 23.6 | 38.0 | 20.0 | 20.0 | - | 62 | 0.5 | 136 | 494 | 861 | 30.3 | 9.2 | 114 | 88851 | Inventive example |
| 13 | M | 38.1 | 52.0 | 52.0 | 4.9 | 5.0 | - | 100 | 2.0 | 94 | 632 | 875 | 22.0 | 9.6 | 125 | 82371 | Inventive example |
| 14 | N | 55.2 | 24.2 | 31.0 | 5.8 | 8.0 | - | 78 | 1.4 | 59 | 816 | 1121 | 16.0 | 7.1 | 114 | 74080 | Inventive example |
| 15 | O | 20.3 | 36.6 | 69.0 | 4.7 | 6.0 | - | 53 | 1.2 | 45 | 656 | 1151 | 11.0 | 5.7 | 97 | 69311 | Inventive example |
| 16 | P | 60.1 | 23.3 | 24.0 | 6.9 | 9.0 | - | 97 | 0.8 | 48 | 979 | 1167 | 17.0 | 6.9 | 98 | 70562 | Inventive example |
| 17 | P | 60.3 | 23.5 | 24.2 | 6.9 | 8.6 | - | 97 | 0.8 | 47 | 978 | 1169 | 17.0 | 6.9 | 98 | 70562 | Inventive example |
| 18 | Q | 69.1 | 17.0 | 20.0 | 4.9 | 6.0 | - | 85 | 1.0 | 89 | 571 | 857 | 26.1 | 8.3 | 90 | 58307 | Inventive example |
| 19 | R | 34.1 | 36.0 | 46.0 | 9.9 | 10.0 | - | 70 | 1.4 | 34 | 770 | 1090 | 17.9 | 7.0 | 86 | 64541 | Inventive example |
| 20 | S | 29.0 | 19.6 | 49.0 | 9.0 | 13.0 | - | 40 | 0.7 | 102 | 626 | 965 | 23.6 | 7.9 | 128 | 83888 | Inventive example |
| 21 | T | 26.9 | 37.2 | 61.0 | 5.1 | 7.0 | - | 61 | 1.3 | 20 | 531 | 803 | 24.2 | 8.4 | 80 | 55091 | Inventive example |
| 22 | U | 20.0 | 50.0 | 59.0 | 9.0 | 12.0 | - | 85 | 1.5 | 96 | 966 | 1145 | 19.9 | 7.8 | 129 | 62822 | Inventive example |
| 23 | AU | 25.0 | 30.0 | 57.0 | 6.0 | 12.0 | - | 40 | 52.6 | 1 | 870 | 1100 | 15.0 | 6.9 | 90 | 67319 | Inventive example |
| 24 | A | 41.2 | 19.0 | 26.5 | 12.5 | 19.8 | - | 72 | 1.1 | 66 | 551 | 951 | 17.2 | 7.9 | 112 | 76063 | Inventive example |
| 25 | B | 27.8 | 20.9 | 44.6 | 12.9 | 14.7 | - | 47 | 0.6 | 59 | 635 | 848 | 20.9 | 10.5 | 111 | 74198 | Inventive example |
| 26 | C | 40.0 | 22.3 | 33.0 | 12.0 | 15.0 | - | 68 | 1.2 | 98 | 627 | 795 | 22.7 | 11.3 | 115 | 83042 | Inventive example |
| 27 | D | 45.4 | 22.7 | 41.3 | 4.7 | 8.6 | - | 54 | 0.9 | 61 | 628 | 977 | 17.8 | 8.3 | 117 | 74851 | Inventive example |
| 28 | E | 36.0 | 23.0 | 57.7 | 3.3 | 3.0 | - | 40 | 0.7 | 60 | 780 | 1175 | 12.9 | 6.6 | 104 | 74455 | Inventive example |
| 29 | F | 25.4 | 25.7 | 45.5 | 12.0 | 17.1 | - | 56 | 0.1 | 33 | 464 | 789 | 21.3 | 11.4 | 106 | 63718 | Inventive example |
| 30 | G | 24.0 | 35.1 | 60.0 | 7.0 | 9.0 | - | 58 | 0.7 | 67 | 568 | 899 | 19.6 | 9.5 | 104 | 76373 | Inventive example |
| 31 | H | 20.0 | 34.3 | 61.7 | 5.5 | 12.8 | - | 52 | 1.2 | 58 | 807 | 1126 | 11.3 | 5.8 | 103 | 73903 | Inventive example |
| 32 | I | 44.0 | 20.7 | 36.0 | 9.0 | 11.0 | - | 58 | 0.9 | 53 | 774 | 982 | 17.8 | 8.4 | 108 | 72167 | Inventive example |
| 33 | J | 27.0 | 46.8 | 58.0 | 6.0 | 9.0 | - | 81 | 0.6 | 118 | 506 | 917 | 18.9 | 9.2 | 129 | 86413 | Inventive example |
| 34 | K | 24.0 | 50.5 | 66.0 | 5.0 | 5.0 | - | 69 | 0.6 | 45 | 700 | 1020 | 16.9 | 8.2 | 92 | 69201 | Inventive example |
| 35 | L | 20.0 | 23.3 | 40.0 | 20.0 | 20.0 | - | 58 | 0.6 | 68 | 483 | 852 | 20.6 | 10.3 | 102 | 76717 | Inventive example |
| 36 | M | 43.2 | 47.0 | 47.0 | 4.6 | 5.2 | - | 87 | 1.5 | 87 | 637 | 893 | 21.4 | 9.8 | 128 | 81091 | Inventive example |
| 37 | N | 57.0 | 22.5 | 29.0 | 6.0 | 8.0 | - | 78 | 1.4 | 55 | 851 | 1099 | 14.7 | 6.7 | 114 | 72989 | Inventive example |
| 38 | O | 22.0 | 37.7 | 68.0 | 5.0 | 5.0 | - | 55 | 1.3 | 48 | 669 | 1093 | 14.9 | 6.8 | 105 | 70668 | Inventive example |
| 39 | P | 61.0 | 22.6 | 23.0 | 7.0 | 9.0 | - | 98 | 0.9 | 44 | 955 | 1168 | 12.6 | 6.4 | 105 | 68898 | Inventive example |
| 40 | P | 60.8 | 22.6 | 23.0 | 7.0 | 9.2 | - | 98 | 0.9 | 45 | 958 | 1170 | 12.5 | 6.4 | 105 | 68898 | Inventive example |
| 41 | Q | 67.3 | 16.8 | 22.0 | 4.6 | 6.1 | - | 77 | 0.9 | 22 | 584 | 883 | 21.8 | 10.8 | 84 | 57027 | Inventive example |
| 42 | R | 38.0 | 36.4 | 43.0 | 10.0 | 9.0 | - | 85 | 1.5 | 38 | 755 | 1153 | 13.2 | 6.1 | 95 | 66222 | Inventive example |
| 43 | S | 27.6 | 21.0 | 49.5 | 9.9 | 13.0 | - | 42 | 0.6 | 92 | 743 | 1052 | 14.9 | 7.4 | 118 | 82029 | Inventive example |
| 44 | T | 27.0 | 36.8 | 61.0 | 5.0 | 7.0 | - | 60 | 1.2 | 22 | 515 | 819 | 22.3 | 10.9 | 82 | 56448 | Inventive example |
| 45 | U | 20.0 | 45.0 | 60.0 | 8.0 | 12.0 | - | 75 | 1.6 | 33 | 939 | 1088 | 13.3 | 6.1 | 138 | 64180 | Inventive example |
| 46 | AU | 25.0 | 30.0 | 57.0 | 8.0 | 10.0 | - | 40 | 52.6 | 1 | 880 | 1120 | 15.2 | 7.0 | 92 | 67319 | Inventive example |

*1)
V(F): area fraction of ferrite
V(BF): area fraction of bainite, V(TM+B): total area fraction of tempered martensite and bainite
V(RA): area fraction of retained austenite, V(FM): area fraction of fresh martensite
V(P): area fraction of pearlite
*1: V(BF)/V(BF+TM) x 100
*2: average grain size of hard second phase in BF

[Table 3-2]

| Steel sheet No. | Steel grade | Steel microstructure (*1) | | | | | | | | Surface soft layer thickness | Yield strength | Tensile strength | Total elongation | Local elongation | VDA bending test | | Notes |
|---|---|---|---|---|---|---|---|---|---|---|---|---|---|---|---|---|---|
| | | V(F) (%) | V(BF) (%) | V(TM+BF) (%) | V(RA) (%) | V(FM) (%) | V(P) (%) | *1 (%) | *2 (μm) | (μm) | YS (MPa) | TS (MPa) | T-El (%) | L-El (%) | Bendability α (degree) | Energy absorption characteristics AE (N·mm) | |
| 47 | V | 68.0 | 10.0 | 20.0 | 5.0 | 7.0 | - | 50 | 1.5 | 19 | 501 | 801 | 24.1 | 12.2 | 84 | 54186 | Comparative example |
| 48 | W | 71.0 | 10.0 | 22.0 | 3.0 | 4.0 | - | 45 | 1.3 | 0 | 601 | 776 | 25.4 | 14.3 | 108 | 48799 | Comparative example |
| 49 | X | 20.0 | 31.7 | 67.0 | 4.0 | 9.0 | - | 47 | 1.5 | 18 | 798 | 1034 | 14.4 | 6.5 | 111 | 53232 | Comparative example |
| 50 | Y | 19.0 | 42.4 | 60.0 | 6.0 | 15.0 | - | 71 | 0.5 | 15 | 563 | 974 | 16.9 | 8.3 | 85 | 50016 | Comparative example |
| 51 | Z | 48.0 | 26.0 | 36.0 | 7.0 | 9.0 | - | 72 | 1.7 | 8 | 561 | 938 | 19.4 | 8.3 | 82 | 52895 | Comparative example |
| 52 | AA | 39.0 | 20.0 | 42.0 | 8.0 | 11.0 | - | 48 | 1.9 | 19 | 805 | 1038 | 15.8 | 6.6 | 83 | 54186 | Comparative example |
| 53 | AB | 33.0 | 19.0 | 50.0 | 6.0 | 11.0 | - | 38 | 1.1 | 44 | 841 | 1117 | 9.8 | 4.2 | 81 | 69082 | Comparative example |
| 54 | AC | 58.0 | 17.0 | 19.0 | 9.0 | 14.0 | - | 89 | 1.7 | 44 | 584 | 998 | 25.0 | 13.0 | 97 | 69000 | Comparative example |
| 55 | AD | 64.0 | 17.0 | 17.0 | 5.0 | 14.0 | - | 100 | 2.4 | 70 | 397 | 792 | 22.5 | 9.4 | 108 | 77270 | Comparative example |
| 56 | AE | 21.0 | 25.0 | 65.0 | 5.0 | 9.0 | - | 38 | 1.5 | 66 | 721 | 1109 | 10.2 | 4.5 | 113 | 76186 | Comparative example |
| 57 | AF | 20.0 | 41.0 | 41.0 | 21.0 | 18.0 | - | 100 | 0.7 | 38 | 799 | 1103 | 26.0 | 4.9 | 102 | 66286 | Comparative example |
| 58 | AG | 46.0 | 10.0 | 19.0 | 6.0 | 8.0 | 21.0 | 53 | 1.2 | 79 | 499 | 750 | 25.1 | 13.9 | 117 | 79294 | Comparative example |
| 59 | AH | 20.0 | 30.0 | 71.0 | 4.0 | 5.0 | - | 42 | 0.3 | 49 | 789 | 1019 | 10.8 | 4.6 | 108 | 70790 | Comparative example |
| 60 | AI | 20.0 | 48.0 | 48.0 | 13.0 | 19.0 | - | 100 | 3.1 | 88 | 619 | 968 | 28.0 | 6.5 | 114 | 81210 | Comparative example |
| 61 | AJ | 20.0 | 47.0 | 47.0 | 13.0 | 20.0 | - | 100 | 3.1 | 91 | 971 | 1175 | 19.0 | 4.9 | 114 | 81772 | Comparative example |
| 62 | AK | 33.0 | 17.0 | 48.0 | 5.0 | 14.0 | - | 35 | 2.1 | 55 | 845 | 1094 | 10.1 | 4.3 | 105 | 73068 | Comparative example |
| 63 | AL | 21.0 | 45.0 | 50.0 | 8.0 | 21.0 | - | 90 | 1.7 | 63 | 697 | 1073 | 11.5 | 5.5 | 77 | 75267 | Comparative example |
| 64 | AM | 23.0 | 27.0 | 40.0 | 7.0 | 30.0 | | 68 | 0.8 | 33 | 901 | 1089 | 11.1 | 4.6 | 78 | 63925 | Comparative example |
| 65 | AN | 46.0 | 38.0 | 44.0 | 4.0 | 6.0 | | 86 | 0.9 | 82 | 431 | 764 | 24.9 | 14.2 | 118 | 80000 | Comparative example |
| 66 | AN | 46.8 | 38.1 | 43.2 | 4.0 | 6.0 | | 88 | 0.9 | 80 | 430 | 760 | 25.1 | 14.4 | 117 | 80125 | Comparative example |
| 67 | AO | 71.0 | 13.0 | 20.0 | 4.0 | 5.0 | | 65 | 1.2 | 50 | 413 | 755 | 26.0 | 15.3 | 104 | 71229 | Comparative example |
| 68 | AP | 30.0 | 32.0 | 40.0 | 8.0 | 22.0 | | 80 | 0.4 | 74 | 919 | 1232 | 8.3 | 3.9 | 117 | 78105 | Comparative example |
| 69 | AQ | 20.0 | 30.1 | 73.0 | 2.0 | 5.0 | - | 41 | 0.7 | 42 | 799 | 1098 | 10.6 | 4.7 | 99 | 68045 | Comparative example |
| 70 | AR | 51.0 | 22.0 | 22.0 | 11.0 | 16.0 | | 100 | 0.5 | 64 | 493 | 848 | 27.7 | 6.9 | 113 | 75709 | Comparative example |
| 71 | AS | 71.0 | 15.0 | 21.0 | 3.0 | 5.0 | | 71 | 1.3 | 34 | 421 | 765 | 25.5 | 14.3 | 98 | 64210 | Comparative example |
| 72 | AT | 19.0 | 26.0 | 63.0 | 5.0 | 13.0 | | 41 | 1.1 | 60 | 620 | 1167 | 10.0 | 5.6 | 115 | 74472 | Comparative example |
| 73 | V | 66.0 | 9.3 | 21.8 | 5.1 | 7.1 | - | 43 | 1.7 | 18 | 505 | 785 | 24.6 | 12.4 | 92 | 52906 | Comparative example |
| 74 | W | 70.8 | 10.1 | 22.0 | 3.0 | 4.2 | - | 46 | 1.1 | 0 | 570 | 753 | 26.1 | 15.8 | 104 | 48799 | Comparative example |
| 75 | X | 20.0 | 34.5 | 67.0 | 4.0 | 9.0 | - | 52 | 1.3 | 18 | 806 | 1034 | 14.4 | 6.6 | 111 | 53581 | Comparative example |
| 76 | Y | 18.0 | 40.3 | 60.0 | 6.0 | 16.0 | - | 67 | 0.5 | 14 | 571 | 970 | 16.7 | 8.2 | 79 | 48352 | Comparative example |
| 77 | Z | 52.0 | 23.4 | 33.0 | 7.0 | 8.0 | - | 71 | 1.5 | 9 | 577 | 966 | 18.9 | 8.3 | 78 | 52895 | Comparative example |
| 78 | AA | 36.6 | 22.0 | 44.1 | 8.2 | 11.1 | - | 50 | 2.1 | 19 | 805 | 1060 | 14.6 | 6.1 | 85 | 54186 | Comparative example |
| 79 | AB | 35.7 | 18.0 | 48.0 | 5.8 | 10.5 | - | 38 | 0.9 | 43 | 824 | 1162 | 9.8 | 4.2 | 88 | 68726 | Comparative example |
| 80 | AC | 58.5 | 15.5 | 19.0 | 9.2 | 13.3 | - | 81 | 2.0 | 44 | 591 | 988 | 25.0 | 12.4 | 101 | 68823 | Comparative example |
| 81 | AD | 62.0 | 17.9 | 19.0 | 5.0 | 14.0 | - | 94 | 2.3 | 74 | 393 | 816 | 21.7 | 9.1 | 104 | 78131 | Comparative example |
| 82 | AE | 16.1 | 22.5 | 69.4 | 5.0 | 9.5 | - | 32 | 1.5 | 62 | 735 | 1120 | 10.2 | 4.5 | 123 | 75095 | Comparative example |
| 83 | AF | 20.0 | 41.0 | 41.0 | 21.0 | 18.0 | - | 100 | 0.6 | 35 | 831 | 1136 | 23.0 | 4.9 | 111 | 65006 | Comparative example |
| 84 | AG | 45.2 | 10.1 | 18.8 | 6.5 | 8.5 | 21.0 | 54 | 1.1 | 82 | 509 | 761 | 25.5 | 10.2 | 116 | 79982 | Comparative example |
| 85 | AH | 20.7 | 32.7 | 71.0 | 3.6 | 4.7 | - | 46 | 0.3 | 49 | 828 | 1009 | 10.9 | 4.9 | 112 | 70966 | Comparative example |
| 86 | AI | 23.2 | 44.6 | 44.6 | 12.2 | 20.0 | - | 100 | 3.1 | 79 | 638 | 939 | 24.0 | 6.4 | 109 | 79351 | Comparative example |
| 87 | AJ | 24.2 | 45.8 | 45.8 | 11.8 | 18.2 | - | 100 | 3.1 | 91 | 972 | 1176 | 18.0 | 4.7 | 106 | 81772 | Comparative example |
| 88 | AK | 35.3 | 17.2 | 45.6 | 5.4 | 13.7 | - | 38 | 2.5 | 52 | 879 | 1105 | 10.1 | 4.3 | 111 | 71788 | Comparative example |
| 89 | AL | 19.2 | 42.3 | 51.5 | 8.3 | 21.0 | - | 82 | 1.8 | 66 | 684 | 1062 | 11.7 | 5.5 | 79 | 76127 | Comparative example |
| 90 | AM | 22.0 | 25.4 | 42.0 | 6.0 | 30.0 | - | 60 | 0.7 | 36 | 901 | 1111 | 11.1 | 4.6 | 72 | 65606 | Comparative example |
| 91 | AN | 48.0 | 41.4 | 42.0 | 4.0 | 6.0 | | 99 | 1.1 | 84 | 440 | 776 | 24.6 | 13.5 | 106 | 80350 | Comparative example |
| 92 | AN | 47.8 | 41.5 | 42.2 | 4.0 | 6.0 | | 98 | 1.1 | 84 | 443 | 770 | 24.8 | 13.7 | 106 | 80200 | Comparative example |
| 93 | AO | 71.4 | 12.9 | 20.0 | 4.0 | 4.6 | | 64 | 1.3 | 53 | 412 | 754 | 26.1 | 15.5 | 115 | 72422 | Comparative example |
| 94 | AP | 32.7 | 34.0 | 38.0 | 8.0 | 21.3 | | 89 | 0.5 | 78 | 901 | 1213 | 9.0 | 3.9 | 124 | 79133 | Comparative example |
| 95 | AQ | 24.0 | 27.9 | 69.0 | 2.0 | 5.0 | - | 41 | 0.7 | 46 | 807 | 1054 | 10.6 | 4.7 | 94 | 69726 | Comparative example |
| 96 | AR | 51.0 | 20.0 | 20.0 | 12.0 | 17.0 | | 100 | 0.5 | 60 | 483 | 823 | 27.1 | 6.8 | 112 | 74617 | Comparative example |
| 97 | AS | 71.3 | 15.8 | 21.0 | 3.0 | 4.7 | | 75 | 1.4 | 33 | 418 | 774 | 25.3 | 14.0 | 97 | 63853 | Comparative example |
| 98 | AT | 15.0 | 24.4 | 68.0 | 5.0 | 12.0 | - | 36 | 1.0 | 65 | 613 | 1169 | 9.9 | 5.6 | 112 | 75829 | Comparative example |

*1)
V(F): area fraction of ferrite
V(BF): area fraction of bainite, V(TM+B): total area fraction of tempered martensite and bainite
V(RA): area fraction of retained austenite, V(FM): area fraction of fresh martensite
V(P): area fraction of pearlite
*1: V(BF)/V(BF+TM) × 100
*2: average grain size of hard second phase in BF

In Tables 1 to 3, the underlined portions indicate values outside the appropriate ranges of the present invention.

As shown in Table 3, all of the inventive examples were acceptable in all of the tensile strength (TS), the yield stress (YS), the total elongation (T-El), the local elongation (L-El), the critical bending angle (α) in the VDA bending test, and the integral value (absorbed energy) (AE) of the load-stroke curve in the VDA bending test. The production efficiency (E) was also good.

On the other hand, the comparative examples failed in at least one of the tensile strength (TS), the yield stress (YS), the total elongation (T-El), the local elongation (L-El), the critical bending angle (α) in the VDA bending test, and the integral value (absorbed energy) (AE) of the load-stroke curve in the VDA bending test.

It was also found that the members produced by forming or joining the steel sheets according to the examples of the present invention had good characteristics characterized by the present invention in all of the tensile strength (TS), the yield stress (YS), the total elongation (T-El), the local elongation (L-El), the critical bending angle (α) in the VDA bending test, and the integral value (absorbed energy) (AE) of the load-stroke curve in the VDA bending test. It was also found that the production efficiency (E) was good.

Industrial Applicability

The present invention can provide a steel sheet with a TS of 780 MPa or more and with good energy absorption characteristics. The use of a member produced from a steel sheet according to the present invention as an automotive part can contribute to the reduction of vehicle weight and greatly contribute to improved performance of automobile bodies.

**Claims**

1. A steel sheet comprising a base steel sheet, wherein the base steel sheet has a chemical composition containing, on a mass percent basis,

    C: 0.05% to 0.30%,
    Si: 0.10% to 2.00%,
    Mn: 1.00% to 3.50%,
    P: 0.001% to 0.100%,
    S: 0.0001% to 0.0200%,
    sol. Al: 0.005% to 2.000%, and
    N: 0.010% or less,
    with the remainder being Fe and incidental impurities, and
    has a steel microstructure, in which area fractions at a quarter thickness position of the base steel sheet are ferrite: 20.0% or more and 70.0% or less,
    a total of bainitic ferrite and tempered martensite: 20.0% or more and 70.0% or less,
    retained austenite: 3.0% or more and 20.0% or less, and fresh martensite: 20.0% or less (including 0.0%),
    an area fraction of the bainitic ferrite is 40% or more of a total area fraction of the bainitic ferrite and the tempered martensite, and
    a hard second phase present in the bainitic ferrite and containing the retained austenite and the fresh martensite has an average grain size of 3.0 μm or less,
    the steel sheet has a surface soft layer formed from a surface of the base steel sheet to a depth of 20 μm or more in a thickness direction, wherein for the steel microstructure, a total area fraction of a non-ferrite microstructure in the surface soft layer is 1/2 or less of that at the quarter thickness position, and
    the steel sheet has a tensile strength of 780 MPa or more and less than 1180 MPa.

2. The steel sheet according to Claim 1, wherein the chemical composition further contains, on a mass percent basis,

    at least one selected from
    Nb: 0.200% or less,
    Ti: 0.200% or less,
    V: 0.200% or less,
    B: 0.0100% or less,
    Cr: 1.000% or less,
    Ni: 1.000% or less,
    Mo: 1.000% or less,
    Sb: 0.200% or less,
    Sn: 0.200% or less,
    Cu: 1.000% or less,

Ta: 0.100% or less,
W: 0.500% or less,
Mg: 0.0200% or less,
Zn: 0.0200% or less,
Co: 0.0200% or less,
Zr: 0.1000% or less,
Ca: 0.0200% or less,
Se: 0.0200% or less,
Te: 0.0200% or less,
Ge: 0.0200% or less,
As: 0.0500% or less,
Sr: 0.0200% or less,
Cs: 0.0200% or less,
Hf: 0.0200% or less,
Pb: 0.0200% or less,
Bi: 0.0200% or less, and
REM: 0.0200% or less.

3. The steel sheet according to Claim 1 or 2, comprising a galvanized layer on one or both surfaces of the base steel sheet.

4. A member produced by using the steel sheet according to any one of Claims 1 to 3.

5. A method for producing a steel sheet, the method comprising:

a hot rolling step of hot-rolling a steel slab with the chemical composition according to Claim 1 or 2 to form a hot-rolled steel sheet;
a pickling step of pickling the hot-rolled steel sheet;
an annealing step of heating the steel sheet after the pickling step and annealing the steel sheet under conditions of an annealing temperature of 720°C or more and 860°C or less, a holding time of 20 seconds or more, and an atmosphere with a dew-point temperature of -10°C or more;
a rapid heating step of rapidly heating the steel sheet from the annealing temperature to the annealing temperature + 10°C or more at a heating rate of 10°C/s or more;
a first cooling step of cooling the steel sheet after the rapid heating step to a first cooling stop temperature of 400°C or more and 600°C or less;
a holding step of holding the steel sheet in a temperature range of 400°C or more and 600°C or less for a holding time of less than 300 seconds;
a second cooling step of cooling the steel sheet after the holding step to a second cooling stop temperature of 100°C or more and 300°C or less; and
a reheating and holding step of heating the steel sheet after the second cooling step to a tempering temperature of 460°C or less and holding the steel sheet in the temperature range for a tempering time of 10 seconds or more and 2000 seconds or less,
or further comprising
a cold rolling step of cold-rolling the steel sheet after the pickling step and before the annealing step at a rolling reduction of 20% or more and 80% or less to form a cold-rolled steel sheet.

6. The method for producing a steel sheet according to Claim 5, wherein a line speed LS (m/min) of the steel sheet in the annealing step satisfies the following formula (1):

$$3.0/(t \times W \times 4.716 \times 10^{-4}) < LS < 390.0/(t \times W \times 4.716 \times 10^{-4}) \qquad \text{formula (1)}$$

wherein

t denotes a sheet thickness (mm) after the pickling step and before the annealing step, and
W denotes a sheet width (mm) after the pickling step and before the annealing step.

7. The method for producing a steel sheet according to Claim 5 or 6, the method comprising, after the holding step and before the second cooling step, a hot-dip galvanizing step of performing a galvanizing treatment on a surface of the steel sheet to form a galvanized layer on the surface of the steel sheet, or
further comprising an alloying treatment step of performing an alloying treatment on the steel sheet on which the galvanized layer is formed.

8. The method for producing a steel sheet according to Claim 5 or 6, the method comprising, after the reheating and holding step, an electrogalvanizing step of immersing the steel sheet in an electrogalvanizing bath to form a galvanized layer on the steel sheet.

9. A method for producing a member, the method comprising a step of subjecting the steel sheet according to any one of Claims 1 to 3 to at least one of forming or joining to produce a member.

## INTERNATIONAL SEARCH REPORT

| International application No. |
|---|
| **PCT/JP2024/006907** |

| A. | CLASSIFICATION OF SUBJECT MATTER |
|---|---|

*C22C 38/00*(2006.01)i; *C21D 9/46*(2006.01)i; *C21D 9/56*(2006.01)i; *C22C 38/06*(2006.01)i; *C22C 38/60*(2006.01)i
FI:  C22C38/00 301S; C21D9/46 G; C21D9/46 J; C21D9/46 T; C21D9/46 U; C21D9/56 101E; C22C38/00 301T; C22C38/00 301W; C22C38/06; C22C38/60

According to International Patent Classification (IPC) or to both national classification and IPC

| B. | FIELDS SEARCHED |
|---|---|

Minimum documentation searched (classification system followed by classification symbols)

C22C38/00-38/60; C21D9/46-9/48; C21D9/56

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2013/125400 A1 (NIPPON STEEL & SUMITOMO METAL CORP.) 29 August 2013 (2013-08-29)<br>claims, examples | 1-9 |
| A | WO 2018/088421 A1 (JFE STEEL CORP.) 17 May 2018 (2018-05-17)<br>claims, examples | 1-9 |
| A | WO 2021/200579 A1 (JFE STEEL CORP.) 07 October 2021 (2021-10-07)<br>claims, examples | 1-9 |
| A | WO 2021/200577 A1 (JFE STEEL CORP.) 07 October 2021 (2021-10-07)<br>claims, examples | 1-9 |
| A | WO 2023/032424 A1 (JFE STEEL CORP.) 09 March 2023 (2023-03-09)<br>claims, examples | 1-9 |

☑ Further documents are listed in the continuation of Box C.    ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **22 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/006907**

### C. DOCUMENTS CONSIDERED TO BE RELEVANT

| Category* | Citation of document, with indication, where appropriate, of the relevant passages | Relevant to claim No. |
|---|---|---|
| P, A | WO 2023/218730 A1 (JFE STEEL CORP.) 16 November 2023 (2023-11-16) claims | 1-9 |
| P, A | WO 2023/218731 A1 (JFE STEEL CORP.) 16 November 2023 (2023-11-16) claims | 1-9 |

Form PCT/ISA/210 (second sheet) (July 2022)

## INTERNATIONAL SEARCH REPORT
### Information on patent family members

International application No.

**PCT/JP2024/006907**

| Patent document cited in search report | Publication date (day/month/year) | Patent family member(s) | Publication date (day/month/year) |
|---|---|---|---|
| WO 2013/125400 A1 | 29 August 2013 | EP 2818569 A1<br>claims, examples<br>BR 112014020567 B1<br>CN 104245988 A<br>ES 2673111 T3<br>IN 7404DEN2014 A<br>KR 10-2014-0129209 A<br>MX 2014009994 A<br>PL 2818569 T3<br>TW 201400626 A<br>US 2015/0037610 A1 | |
| WO 2018/088421 A1 | 17 May 2018 | JP 6597889 B2 | |
| WO 2021/200579 A1 | 07 October 2021 | EP 4130323 A1<br>claims, examples<br>CN 115349028 A<br>KR 10-2022-0145390 A<br>MX 2022012143 A<br>US 2023/0129828 A1 | |
| WO 2021/200577 A1 | 07 October 2021 | EP 4130326 A1<br>claims, examples<br>CN 115362275 A<br>KR 10-2022-0144404 A<br>MX 2022012141 A<br>US 2023/0160032 A1 | |
| WO 2023/032424 A1 | 09 March 2023 | CN 117881811 A<br>KR 10-2024-0035537 A | |
| WO 2023/218730 A1 | 16 November 2023 | WO 2023/218576 A1 | |
| WO 2023/218731 A1 | 16 November 2023 | (Family: none) | |

Form PCT/ISA/210 (patent family annex) (July 2022)

## EP 4 663 801 A1

**Patent documents cited in the description**

- JP 5256689 B
- JP 5354135 B
- JP 5352793 B